# EUROPEAN PATENT APPLICATION

(11) **EP 4 642 120 A1**
(43) Date of publication of application: **29.10.2025**
(21) Application number: 23914430.6
(22) Date of filing: 24.11.2023
(51) Int. Cl.: H04W 68/02

(54) **PAGING METHOD, ACCESS NETWORK DEVICE AND USER EQUIPMENT**

(30) Priority: 04.01.2023 CN 202310009262; 10.02.2023 CN 202310138993
(71) Applicant: Huawei Technologies Co., Ltd., Shenzhen, Guangdong 518129 (CN)
(72) Inventor: KUANG, Yiru, Shenzhen, Guangdong 518129 (CN); XUE, Yifan, Shenzhen, Guangdong 518129 (CN); XU, Haibo, Shenzhen, Guangdong 518129 (CN); XUE, Lixia, Shenzhen, Guangdong 518129 (CN)
(74) Representative: Pfenning, Meinig & Partner mbB
(86) International application number: PCT/CN2023/134125
(87) International publication number: WO 2024/146296

(57) **Abstract**

This application provides a paging method, applied to an access network device. The method includes: sending a first indication message, to indicate a first paging manner of a first cell; and paging a UE in the first paging manner, where the UE camps on the first cell, and the first cell is one of one or more cells of the access network device. The first paging manner includes any one of the following: (1) wake up WUR link-based and user equipment identifier UE ID-based paging; (2) NR main link only-based paging; and (3) WUR link-based and user equipment UE group identifier ID-based paging. In this application, on a premise of reducing power consumption as much as possible, any UE, in a cell, that operates on a WUR link can be woken up in real time, and paging can be performed on any one or more UEs or all UEs in the same cell in real time.

## Description

This application claims priority to Chinese Patent Application No. 202310009262.3, filed with the China National Intellectual Property Administration on January 4, 2023 and entitled "METHOD FOR SUPPORTING PAGING ON WUR LINK, TERMINAL DEVICE, NETWORK DEVICE, AND COMMUNICATION SYSTEM", which is incorporated herein by reference in its entirety.

This application claims priority to Chinese Patent Application No. 202310138993.8, filed with the China National Intellectual Property Administration on February 10, 2023 and entitled "PAGING METHOD, ACCESS NETWORK DEVICE, AND USER EQUIPMENT", which is incorporated herein by reference in its entirety.

### TECHNICAL FIELD

This application relates to the communication field, and in particular, to a paging method, an access network device, and a user equipment.

### BACKGROUND

To reduce power consumption, a UE usually includes an NR circuit (which may also be referred to as a main circuit) and a wake up (Wake Up Receiver/Radio, WUR) circuit. The NR circuit may also be referred to as a main receiver, and the WUR circuit may also be referred to as a wake up receiver. The main circuit corresponds to an NR main link. The WUR circuit corresponds to a WUR link. When the UE is connected to a network device over the NR main link (which may also be referred to as an NR link or a main link), the main circuit operates. In this case, power consumption of the UE is high. When the UE is connected to a network device over the WUR link, the WUR circuit operates, and the main circuit does not operate when no wake up signal is received. In this case, power consumption of the UE is low. After a wake up signal is received, the WUR circuit enables, by using an internal signal, the main circuit to operate. Therefore, on a premise of the fulfillment of an operating requirement of the UE, that the WUR circuit of the UE operates and the main circuit does not operate is maximally ensured, so that the power consumption of the UE can be reduced.

### SUMMARY

In a communication system, a core network (Core Network, CN) device may perform paging (which may be referred to as CN paging) on a user equipment (User Equipment, UE) in a radio resource control (Radio Resource Control, RRC) idle (IDLE) state. CN paging may be classified into two types: NR main link only-based CN paging and WUR link-based CN paging.

NR main link only-based CN paging means that, for the UE in the RRC idle state, the CN device sends a paging message, where the paging message is sent to a radio access network (Radio Access Network, RAN) device, and the RAN device sends the paging message on an NR main link.

WUR link-based CN paging means that, for the UE in the RRC idle state, the CN device sends a paging message, where the paging message is sent to a RAN device; and the RAN device wakes up the UE on a WUR link by using a wake up signal (also referred to as a low power wake up signal (Low Power Wake Up Signal, LP-WUS)), and then sends the paging message on an NR main link.

NR main link only-based CN paging is for the UE that operates on the NR main link, and WUR link-based CN paging is for the UE that operates on the WUR link.

In addition, in the communication system, the RAN device may perform paging (which may be referred to as RAN paging) on a UE in an RRC inactive (INACTIVE) state. RAN paging may be classified into two types: NR main link only-based RAN paging and WUR link-based RAN paging.

NR main link only-based RAN paging means that, for the UE in the RRC inactive state, the RAN device sends a paging message on an NR main link; or for the UE in the RRC inactive state, an anchor RAN device sends a paging message, where the paging message is sent to another RAN device, and the another RAN device sends the paging message on an NR main link.

WUR link-based RAN paging means that, for the UE in the RRC inactive state, the RAN device wakes up the UE on a WUR link by using an LP-WUS, and then sends a paging message on an NR main link; or for the UE in the RRC inactive state, an anchor RAN device sends a paging message, where the paging message is sent to another RAN device, and the another RAN device wakes up the UE on a WUR link by using an LP-WUS, and then sends the paging message on an NR main link.

NR main link only-based RAN paging is for the UE that operates on the NR main link, and WUR link-based RAN paging is for the UE that operates on the WUR link. The anchor RAN device is a RAN device that initiates RAN paging.

NR main link only-based CN paging and NR main link only-based RAN paging may be collectively referred to as NR main link only-based paging.

WUR link-based CN paging and WUR link-based RAN paging may be collectively referred to as WUR link-based paging.

WUR link-based paging may be further classified into WUR link-based and UE ID-based paging; or WUR link-based and UE group ID-based paging.

WUR link-based and UE ID-based paging means that the RAN device wakes up a specific UE on the WUR link by using the LP-WUS, to be specific, the LP-WUS can carry UE ID information.

WUR link-based and UE group ID-based paging is: The RAN device wakes up a specific UE group on the WUR link by using the LP-WUS, to be specific, the LP-WUS can carry UE group ID information.

To perform WUR link-based paging, the following needs to be satisfied first: Both a cell serving a UE and the UE are capable of using one or more specific WUR link-based paging manners. For example, both the cell serving the UE and the UE are capable of using WUR link-based and UE ID-based paging. For another example, both the cell serving the UE and the UE are capable of using WUR link-based and UE group ID-based paging. Being capable of using one or more specific WUR link-based paging manners is also referred to as supporting a WUR function. Some specific WUR link-based paging manners include all specific WUR link-based paging manners.

In a same cell of the communication system, there may be a UE in an RRC connected (CONNECTED) state, a UE in an RRC idle state, or a UE in an RRC inactive state (which may also be referred to as an inactive state). For the UE in the RRC connected state, the CN device or the RAN device directly pages the UE on the NR main link. For the UE in the RRC idle state, the CN device performs NR main link only-based CN paging, or performs WUR link-based CN paging. For the UE in the RRC inactive state, the RAN device performs NR main link only-based RAN paging, or performs WUR link-based RAN paging. Any two or three of the UEs in the three different RRC states may coexist in the same cell of the communication system. Therefore, in the same cell of the communication system, both CN paging and RAN paging may exist.

Because a modulation scheme of the LP-WUS is simple and a modulation order is low, a modulated LP-WUS carries less valid information. As a result, a data transmission rate of transmission performed by using the modulated LP-WUS is low, and a single LP-WUS or an LP-WUS in unit duration carries a small quantity of bits. In this case, if there are a large quantity of UEs in the same cell of the communication system, it may not be possible to wake up, in real time, all UEs or most UEs that operate on the WUR link and that are in the same cell, and consequently, paging cannot be performed on all the UEs or most UEs in the same cell in real time subsequently.

To resolve the foregoing disadvantages, two solutions are provided. In a first solution, a length of a UE identifier (Identifier, ID) carried by the single LP-WUS is shortened (for example, a quantity of occupied bits is reduced). In this way, a same LP-WUS can carry more UE IDs, so that more UEs that operate on the WUR link are woken up in real time. Further, in subsequent paging, paging can be performed on more UEs in real time. In a second solution, UEs in the same cell are grouped, and the LP-WUS carries UE grouping information such as a group ID, to ensure that any UE that operates on the WUR link can be woken up in real time. Further, in subsequent paging, paging can be performed on more UEs in real time.

Through deep research and analysis, the first solution has the following technical problem: Even if a shorter UE ID is used, when there are a larger quantity of UEs in the same cell of the communication system, paging cannot be performed on all UEs or most UEs in the same cell in real time. In addition, the second solution has the following technical problem: All UEs in a same group are woken up, but actually, only one or more UEs in the group may need to be woken up and paged. Consequently, wake up of other UEs in the group is false wake up. In addition, the other UEs in the group switch to the NR main link after being woken up and wait to receive a paging message, and switch back to the WUR link if no paging message is received in specific duration. As a result, power consumption of the other UEs in the group is increased. Power consumption of the UE is high when the UE switches between the WUR link and the NR main link (because the NR main link is powered on/off), and is even far greater than power consumption of the UE when the UE completely operates on the NR main link.

To resolve the foregoing technical problems, this application proposes a paging method, an access network device, a user equipment, and a communication system. Therefore, on a premise of reducing power consumption as much as possible, any UE, in a cell, that operates on a WUR link can be woken up in real time, and paging can be performed on any one or more UEs or all UEs in the same cell in real time. The user equipment may also be referred to as a terminal device.

According to a first aspect, a paging method is provided. The method is applied to an access network device, and the method includes:
sending a first indication message, where the first indication message indicates a first paging manner of a first cell; and
paging a user equipment UE in the first paging manner, where
the UE camps on the first cell, and the first cell is one of one or more cells of the access network device; and the first paging manner includes any one of the following:
   (1) wake up WUR link - based and user equipment identifier UE ID - based paging; (2) NR main link only-based paging; and (3) WUR link-based and user equipment UE group identifier ID-based paging;
   (1) WUR link-based, UE ID-based, and UE group ID-based paging; and (2) NR main link only-based paging;
   (1) wake up WUR link - based and user equipment identifier UE ID - based paging; and (2) NR main link only-based paging; or
   (1) WUR link-based and UE group ID-based paging; and (2) NR main link only-based paging.

According to the first aspect, the first paging manner is a paging manner determined from at least two paging manners.

According to any one of the first aspect and the implementations of the first aspect,
if the first indication message includes no first field, the first paging manner is NR main link only-based paging;
if the first indication message includes a first field, and a value of the first field is a first value, the first paging manner is the WUR link-based paging, and the paging on the WUR link is based on the UE ID; or
if the first indication message includes a first field, and a value of the first field is a second value, the first paging manner is the WUR link-based paging, and the paging on the WUR link is based on the UE group ID.

According to any one of the first aspect and the implementations of the first aspect,
if the first indication message includes only a first field, the first paging manner is the WUR link-based paging, and the paging on the WUR link is based on the UE ID;
if the first indication message includes only a second field, the first paging manner is the WUR link-based paging, and the paging on the WUR link is based on the UE group ID;
if the first indication message includes a first field and a second field, the first paging manner is the WUR link-based paging, and the paging on the WUR link is based on the UE ID and the UE group ID; or
if the first indication message neither includes a first field nor a second field, the first paging manner is NR main link only-based paging.

According to any one of the first aspect and the implementations of the first aspect, when the first paging manner includes any one of the following: (1) WUR link-based, UE ID-based, and UE group ID-based paging; and (2) NR main link only-based paging,
if the first indication message includes a first field, the first paging manner is the WUR link-based paging, and the paging on the WUR link is based on the UE ID and the UE group ID; or
if the first indication message includes no first field, the first paging manner is NR main link only-based paging.

According to any one of the first aspect and the implementations of the first aspect, before sending the first indication message, the method includes:
if a first quantity of UEs is less than or equal to a UE capacity upper limit, determining that the first paging manner is: (1) the wake up WUR link-based and user equipment identifier UE ID-based paging, where
the first quantity of UEs is determined based on a current quantity of UEs in a tracking area TA and a current quantity of UEs in a radio access network notification area RNA; or the first quantity of UEs is determined based on a current quantity of UEs in a tracking area TA.

According to any one of the first aspect and the implementations of the first aspect, before sending the first indication message, the method includes:
if a first quantity of UEs is greater than a UE capacity upper limit, and is greater than a specific value above the UE capacity upper limit, determining that the first paging manner is: (2) the NR main link only-based paging, where
the first quantity of UEs is determined based on a current quantity of UEs in a tracking area TA and a current quantity of UEs in a radio access network notification area RNA, or the first quantity of UEs is determined based on a current quantity of UEs in a tracking area TA.

According to any one of the first aspect and the implementations of the first aspect, before sending the first indication message, the method includes:
if a first quantity of UEs is greater than a UE capacity upper limit, and is less than or equal to a specific value above the UE capacity upper limit, determining that the first paging manner is: (3) the WUR link-based and UE group ID-based paging, where
the first quantity of UEs is determined based on a current quantity of UEs in a tracking area TA and a current quantity of UEs in a radio access network notification area RNA, or the first quantity of UEs is determined based on a current quantity of UEs in a tracking area TA.

According to any one of the first aspect and the implementations of the first aspect, before sending the first indication message, the method includes: receiving a second indication message from a core network device, where the second indication message indicates the first paging manner.

According to any one of the first aspect and the implementations of the first aspect, before paging the UE in the first paging manner, the method includes: receiving a first paging message from the core network device, where the first paging message is used to page the UE.

According to any one of the first aspect and the implementations of the first aspect, the UE ID is a short UE ID, the short UE ID is a UE ID dedicated to the wake up WUR link, and the first indication message is sent in a broadcast manner.

For any one of the first aspect and the implementations of the first aspect, regardless of CN paging or RAN paging, different paging manners may be used to expand coverage, implement accurate wake up, and reduce false wake up. Therefore, on a premise of reducing power consumption as much as possible, any UE, in a cell, that operates on the WUR link can be woken up in real time, and paging can be performed on any one or more UEs or all UEs in the same cell in real time.

According to a second aspect, a paging method is provided. The method is applied to a user equipment UE. The method includes:
receiving a first indication message, where the first indication message indicates a first paging manner of a first cell; and
receiving paging in the first paging manner, where
the UE camps on the first cell, and the first cell is one of one or more cells of an access network device; and
the first paging manner includes any one of the following:
   (1) wake up WUR link-based and user equipment identifier UE ID-based paging; (2) NR main link only-based paging; and (3) WUR link-based and user equipment UE group identifier ID-based paging;
   (1) WUR link-based, UE ID-based, and UE group ID-based paging; and (2) NR main link only-based paging;
   (1) wake up WUR link-based and user equipment identifier UE ID-based paging; and (2) NR main link only-based paging; or
   (1) WUR link-based and UE group ID-based paging; and (2) NR main link only-based paging.

According to the second aspect, the first paging manner is a paging manner determined from at least two paging manners.

According to any one of the second aspect and the implementations of the second aspect,
if the first indication message includes no first field, the first paging manner is NR main link only-based paging;
if the first indication message includes a first field, and a value of the first field is a first value, the first paging manner is the WUR link-based paging, and the paging on the WUR link is based on the UE ID; or
if the first indication message includes a first field, and a value of the first field is a second value, the first paging manner is the WUR link-based paging, and the paging on the WUR link is based on the UE group ID.

According to any one of the second aspect and the implementations of the second aspect,
if the first indication message includes only a first field, the first paging manner is the WUR link-based paging, and the paging on the WUR link is based on the UE ID;
if the first indication message includes only a second field, the first paging manner is the WUR link-based paging, and the paging on the WUR link is based on the UE group ID;
if the first indication message includes a first field and a second field, the first paging manner is the WUR link-based paging, and the paging on the WUR link is based on the UE ID and the UE group ID; or
if the first indication message neither includes a first field nor a second field, the first paging manner is the NR main link only-based paging.

According to any one of the second aspect and the implementations of the second aspect,
the first paging manner includes any one of the following: (1) the WUR link-based, UE ID-based, and UE group ID-based paging; and (2) the NR main link only-based paging,
if the first indication message includes a first field, the first paging manner is the WUR link-based paging, and the paging on the WUR link is based on the UE ID and the UE group ID; or
if the first indication message includes no first field, the first paging manner is the NR main link only-based paging.

For technical effects corresponding to any one of the second aspect and the implementations of the second aspect, refer to technical effects corresponding to any one of the first aspect and the implementations of the first aspect. Details are not described herein again.

According to a third aspect, a paging method is provided. The method is applied to an access network device. The method includes:
sending a first indication message, where the first indication message indicates that a UE that satisfies a first condition uses a first paging manner;
determining that a first UE is the UE that satisfies the first condition; and
paging the first UE in the first paging manner, where
the first UE is capable of using the first paging manner, the first paging manner is WUR link-based paging, the UE that satisfies the first condition includes the first UE, and the first condition includes at least one of the following: A UE type is a first type, a UE service type is a first service type, and a discontinuous reception DRX cycle of the UE is less than or equal to a first threshold.

According to the third aspect, the method includes:
the first indication message indicates that a UE that does not satisfy the first condition uses a second paging manner;
determining that a second UE is the UE that does not satisfy the first condition; and
paging the second UE in the second paging manner, where
the second UE is capable of using the second paging manner, and the first paging manner is different from the second paging manner.

According to any one of the third aspect and the implementations of the third aspect, the first paging manner is determined from at least two paging manners.

According to any one of the third aspect and the implementations of the third aspect, the first condition includes at least one of the following:
(1) The discontinuous reception DRX cycle of the UE is a specific DRX cycle, and the specific DRX cycle of the UE is less than or equal to the first threshold;
(2) the first type is a reduced capability RedCap, does not support extended DRX, eDRX, or is not configured with eDRX; and
(3) the first service type is an allowed slice service type determined with a core network device, and the slice service type includes ultra-reliable low-latency communication URLLC, massive internet of things MIoT, or high-performance machine-type communication HMTC.

According to any one of the third aspect and the implementations of the third aspect, the first paging manner is a paging manner determined from at least two paging manners.

According to any one of the third aspect and the implementations of the third aspect, the first paging manner includes any one of the following: (1) wake up WUR link-based and user equipment identifier UE ID-based paging; (2) WUR link-based and user equipment UE group identifier ID-based paging; and (3) WUR link-based, UE ID-based, and UE group ID-based paging.

According to any one of the third aspect and the implementations of the third aspect, the second paging manner includes NR main link only-based paging.

According to any one of the third aspect and the implementations of the third aspect, before paging the first UE in the first paging manner, the method includes:
receiving a first paging message from the core network device, where the first paging message indicates to page the first UE, and the first paging message includes a first UE ID; and
receiving a second paging message from the core network device, where the second paging message indicates to page the second UE, and the second paging message includes a second UE ID;
paging the first UE in the first paging manner includes: paging the first UE in the first paging manner based on the first paging message; and
paging the second UE in the second paging manner includes: paging the second UE in the second paging manner based on the second paging message.

According to any one of the third aspect and the implementations of the third aspect, the first paging message includes first information, and the first information includes related information about the first UE or a first result indicating that the first UE satisfies the first condition. The second paging message includes second information, and the second information includes related information about the second UE or a second result indicating that the second UE does not satisfy the first condition.

According to any one of the third aspect and the implementations of the third aspect, paging the first UE in the first paging manner based on the first paging message includes: paging the first UE in the first paging manner based on the first information. Paging the second UE in the second paging manner based on the second paging message includes: paging the second UE in the second paging manner based on the second information.

According to any one of the third aspect and the implementations of the third aspect, on a premise of reducing power consumption as much as possible, any UE, in a cell, that operates on a WUR link can be woken up in real time, and paging can be performed on any one or more UEs or all UEs in the same cell in real time. In addition, a quantity of UEs on the WUR link can be controlled, and the quantity of UEs on the WUR link can be flexibly adjusted.

According to a fourth aspect, a paging method is provided. The method is applied to a user equipment UE, where the UE is a first UE. The method includes:
receiving a first indication message, where the first indication message indicates that a UE that satisfies a first condition uses a first paging manner;
determining, based on the first indication message, that the first UE is the UE that satisfies the first condition; and
receiving paging in the first paging manner, where
the first UE is capable of using the first paging manner, the first paging manner is WUR link-based paging, the first UE satisfies the first condition, the UE that satisfies the first condition includes the first UE, and the first condition includes at least one of the following: A UE type is a first type, a UE service type is a first service type, and a discontinuous reception DRX cycle of the UE is less than or equal to a first threshold.

According to the fourth aspect, the first condition includes at least one of the following:
(1) The discontinuous reception DRX cycle of the UE is a specific DRX cycle, and the specific DRX cycle of the UE is less than or equal to the first threshold;
(2) the first type is a reduced capability RedCap, does not support extended DRX, eDRX, or is not configured with eDRX; and
(3) the first service type is an allowed slice service type determined with a core network device, and the slice service type includes ultra-reliable low-latency communication URLLC, massive internet of things MIoT, or high-performance machine-type communication HMTC.

According to any one of the fourth aspect and the implementations of the fourth aspect, the first paging manner is a paging manner from at least two paging manners.

According to any one of the fourth aspect and the implementations of the fourth aspect, the first paging manner includes any one of the following: (1) wake up WUR link-based and user equipment identifier UE ID-based paging; (2) WUR link-based and user equipment UE group identifier ID-based paging; and (3) WUR link-based, UE ID-based, and UE group ID-based paging.

For technical effects corresponding to any one of the fourth aspect and the implementations of the fourth aspect, refer to technical effects corresponding to any one of the third aspect and the implementations of the third aspect. Details are not described herein again.

According to a fifth aspect, a paging method is provided. The method is applied to an access network device. The method includes:
sending a first message and a first indication message, where the first message is for configuring a first user equipment UE to use a first paging manner, and the first indication message indicates the first paging manner of a first cell; and
paging the first UE in the first paging manner, where
the first UE is capable of using the first paging manner, the first paging manner is WUR link-based paging, and the first UE camps on the first cell.

In this way, on a premise of reducing power consumption as much as possible, any UE, in a cell, that operates on a WUR link can be woken up in real time, and paging can be performed on any one or more UEs or all UEs in the same cell in real time. In addition, a quantity of UEs on the WUR link can be controlled, and the quantity of UEs on the WUR link can be flexibly adjusted.

According to the fifth aspect, the method includes:
sending a second message, where the second message is for configuring a second user equipment UE to use a second paging manner; and
paging the second UE in the second paging manner, where
the second UE is capable of using the second paging manner, and the second UE camps on the first cell.

According to any one of the fifth aspect and the implementations of the fifth aspect, the first paging manner is a paging manner determined from at least two paging manners.

According to any one of the fifth aspect and the implementations of the fifth aspect, the first paging manner includes any one of the following: (1) wake up WUR link-based and user equipment identifier UE ID-based paging; (2) WUR link-based and user equipment UE group identifier ID-based paging; and (3) WUR link-based, UE ID-based, and UE group ID-based paging.

According to any one of the fifth aspect and the implementations of the fifth aspect, the second paging manner includes NR main link only-based paging.

According to any one of the fifth aspect and the implementations of the fifth aspect, the method includes: receiving a first paging message from a core network device, where the first paging message is used to page the first UE, and the first paging message indicates that the first UE uses the first paging manner.

According to any one of the fifth aspect and the implementations of the fifth aspect, before paging the first UE in the first paging manner, the method includes: determining, based on the first paging message, to page the first UE in the first paging manner.

According to any one of the fifth aspect and the implementations of the fifth aspect, before sending the first message, the method includes: determining that the first UE is a UE that satisfies a first condition, where the first condition includes at least one of the following: A UE type is a first type, a UE service type is a first service type, and a discontinuous reception DRX cycle of the UE is less than or equal to a first threshold.

According to any one of the fifth aspect and the implementations of the fifth aspect, the first condition includes at least one of the following:
(1) The discontinuous reception DRX cycle of the UE is a specific DRX cycle, and the specific DRX cycle of the UE is less than or equal to the first threshold;
(2) the first type is a reduced capability RedCap, does not support extended DRX, eDRX, or is not configured with eDRX; and
(3) the first service type is an allowed slice service type determined with a core network device, and the slice service type includes ultra-reliable low-latency communication URLLC, massive internet of things MIoT, or high-performance machine-type communication HMTC.

According to a sixth aspect, a paging method is provided. The method is applied to a user equipment UE, where the user equipment is a first UE. The method includes:
receiving a first message and a first indication message, where the first message is for configuring the first UE to use a first paging manner, and the first indication message indicates the first paging manner of a first cell;
determining, based on the first message and the first indication message, to receive paging in the first paging manner; and
receiving paging in the first paging manner, where
the first UE is capable of using the first paging manner, the first UE camps on the first cell, and the first paging manner is WUR link-based paging.

According to the sixth aspect, the first paging manner is a paging manner from at least two paging manners.

According to any one of the sixth aspect and the implementations of the sixth aspect, the first paging manner includes any one of the following: (1) wake up WUR link-based and user equipment identifier UE ID-based paging; (2) WUR link-based and user equipment UE group identifier ID-based paging; and (3) WUR link-based, UE ID-based, and UE group ID-based paging.

According to any one of the sixth aspect and the implementations of the sixth aspect, before receiving the first message and the first indication message, the method includes: indicating, to an access network device, that the first UE is capable of using the first paging manner.

For technical effects corresponding to any one of the sixth aspect and the implementations of the sixth aspect, refer to technical effects corresponding to any one of the fifth aspect and the implementations of the fifth aspect. Details are not described herein again.

According to a seventh aspect, an access network device is provided. The access network device includes a processor and a memory. The memory stores a computer program. When the computer program is run by the processor, the access network device is enabled to perform the method according to any one of the first aspect and the implementations of the first aspect, any one of the third aspect and the implementations of the third aspect, or any one of the fifth aspect and the implementations of the fifth aspect.

According to an eighth aspect, a user equipment is provided. The user equipment includes a processor and a memory. The memory stores a computer program. When the computer program is run by the processor, the user equipment is enabled to perform the method according to any one of the second aspect and the implementations of the second aspect, any one of the fourth aspect and the implementations of the fourth aspect, or any one of the sixth aspect and the implementations of the sixth aspect.

According to a ninth aspect, a computer-readable storage medium is provided. The computer-readable storage medium stores a computer program. When the computer program is run on an access network device, the access network device is enabled to perform the method according to any one of the first aspect and the implementations of the first aspect, any one of the third aspect and the implementations of the third aspect, or any one of the fifth aspect and the implementations of the fifth aspect.

According to a tenth aspect, a computer-readable storage medium is provided. The computer-readable storage medium stores a computer program. When the computer program is run on a user equipment, the user equipment is enabled to perform the method according to any one of the second aspect and the implementations of the second aspect, any one of the fourth aspect and the implementations of the fourth aspect, or any one of the sixth aspect and the implementations of the sixth aspect.

According to an eleventh aspect, a chip is provided. The chip includes a processor and a memory coupled to the processor. The memory stores a computer program, and the chip is located in an access network device. When the processor executes the computer program, the access network device is enabled to perform the method according to any one of the first aspect and the implementations of the first aspect, any one of the third aspect and the implementations of the third aspect, or any one of the fifth aspect and the implementations of the fifth aspect.

According to a twelfth aspect, a chip is provided. The chip includes a processor and a memory coupled to the processor. The memory stores a computer program, and the chip is located in a user equipment. When the processor executes the computer program, the user equipment is enabled to perform the method according to any one of the second aspect and the implementations of the second aspect, any one of the fourth aspect and the implementations of the fourth aspect, or any one of the sixth aspect and the implementations of the sixth aspect.

According to a thirteenth aspect, a computer program product is provided. The computer program product is stored on a computer-readable storage medium. When the computer program product runs on an access network device, the access network device is enabled to perform the method according to any one of the first aspect and the implementations of the first aspect, any one of the third aspect and the implementations of the third aspect, or any one of the fifth aspect and the implementations of the fifth aspect.

According to a fourteenth aspect, a computer program product is provided. The computer program product is stored on a computer-readable storage medium. When the computer program product runs on a user equipment, the user equipment is enabled to perform the method according to any one of the second aspect and the implementations of the second aspect, any one of the fourth aspect and the implementations of the fourth aspect, or any one of the sixth aspect and the implementations of the sixth aspect.

Technical effects corresponding to any one of the seventh aspect and the implementations of the seventh aspect, technical effects corresponding to any one of the eighth aspect and the implementations of the eighth aspect, technical effects corresponding to any one of the ninth aspect and the implementations of the ninth aspect, and technical effects corresponding to any one of the tenth aspect and the implementations of the tenth aspect, refer to the technical effects corresponding to any one of the first aspect and the implementations of the first aspect, any one of the third aspect and the implementations of the third aspect, and any one of the fifth aspect and the implementations of the fifth aspect. Details are not described herein again.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1 is a diagram of transition of several RRC states of a UE;
FIG. 2 is a diagram of a communication connection between an access network device and a user equipment;
FIG. 3 is a diagram of an example classification procedure of Embodiment 1 of a paging method according to an embodiment of this application;
FIG. 4 is a diagram of an example classification procedure of Embodiment 1 of a paging method according to an embodiment of this application;
FIG. 5 is a diagram of an example paging procedure of Embodiment 1 of a paging method according to an embodiment of this application;
FIG. 6 is a diagram of an example paging procedure of Embodiment 1 of a paging method according to an embodiment of this application;
FIG. 7 is a diagram of an example procedure before paging in Embodiment 2 of a paging method according to an embodiment of this application;
FIG. 8 is a diagram of an example paging procedure of Embodiment 2 of a paging method according to an embodiment of this application;
FIG. 9 is a diagram of an example paging procedure of Embodiment 2 of a paging method according to an embodiment of this application;
FIG. 10 is a diagram of an example procedure before paging in Embodiment 2 of a paging method according to an embodiment of this application;
FIG. 11 is a diagram of an example paging procedure of Embodiment 2 of a paging method according to an embodiment of this application;
FIG. 12 is a diagram of an example paging procedure of Embodiment 2 of a paging method according to an embodiment of this application;
FIG. 13 is a diagram of an example procedure before paging in Embodiment 2 of a paging method according to an embodiment of this application;
FIG. 14 is a diagram of an example paging procedure of Embodiment 2 of a paging method according to an embodiment of this application;
FIG. 15 is a diagram of an example paging procedure of Embodiment 2 of a paging method according to an embodiment of this application; and
FIG. 16 is a diagram of composition of a structure of an access network device, a core network device, or a user equipment according to an embodiment of this application.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough understanding of this application. It should be understood that, the accompanying drawings and embodiments of this application are merely used as examples, and are not intended to limit the protection scope of this application.

Embodiments of this application may be implemented according to any proper communication protocol, including but not limited to cellular communication protocols such as 5th generation (5th Generation, 5G) or 6th generation (6th Generation, 6G), a radio local area network communication protocol such as the Institute of Electrical and Electronics Engineers (Institute of Electrical and Electronics Engineers, IEEE) 802.11, and/or any other protocol currently known or developed in the future.

The technical solutions in embodiments of this application are applied to a communication system that complies with any proper communication protocol, for example, a general packet radio service (General Packet Radio Service, GPRS), a global system for mobile communications (Global System for Mobile communications, GSM), an enhanced data rate GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a 5th generation system or a new radio (New Radio, NR) system, and a future-evolved 6th generation communication system.

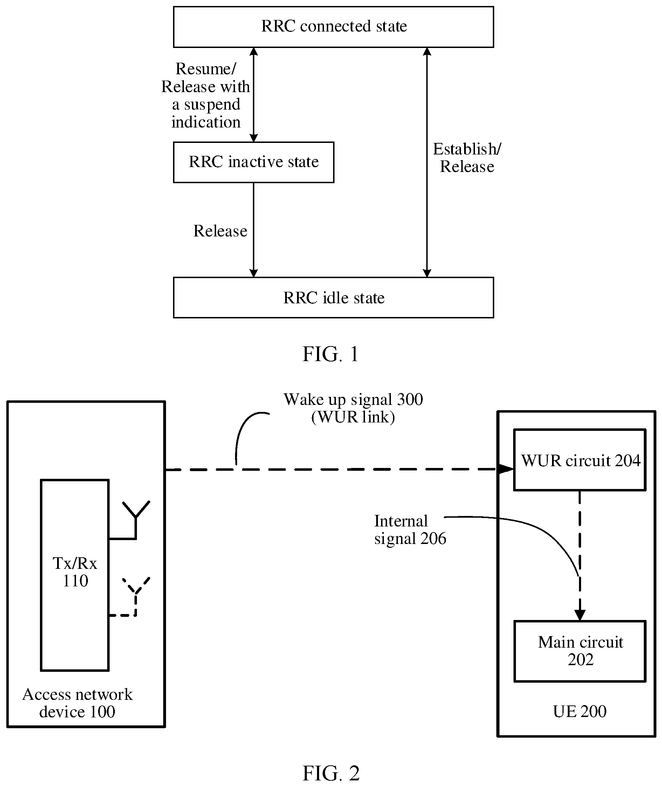

Before embodiments of this application are specifically described, some terms in this application are first explained.
(1) A user equipment (User Equipment, UE) is any terminal device that can perform wired or wireless communication with a network device. The user equipment may also be referred to as a terminal device. The terminal device may be any type of mobile terminal, fixed terminal, or portable terminal. For example, the terminal device may include a mobile phone, a station, a unit, a device, a mobile terminal (Mobile Terminal, MT), a customer premises equipment (Customer Premises Equipment, CPE), a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, a vehiclemounted device, a flight vehicle, a virtual reality (Virtual Reality, VR) device, an augmented reality (Augmented Reality, AR) device, a wearable device, a terminal device in a 5G network or any terminal device in an evolved public land mobile network (Public Land Mobile Network, PLMN), another device that can be used for communication, or any combination thereof. This is not limited in embodiments of this application.
(2) An access network device is a network device that has a wireless transceiver function and that is configured to communicate with a user equipment. The access network device may be an apparatus that is deployed in a radio access network and that provides a wireless communication function for a mobile terminal. For example, the access network device may be a radio access network (Radio Access Network, RAN) device. The access network device may include various types of base stations. For example, the access network device may include various forms of macro base stations, micro base stations, picocell base stations, femto base stations, relay stations, access points, remote radio units (Remote Radio Units, RRUs), radio heads (Radio Heads, RHs), and remote radio heads (Remote Radio Heads, RRHs). In systems using different radio access technologies, names of access network devices may be different. For example, in a 5G network, the access network device may be referred to as a gNodeB (gNB) or an NR NodeB (NR NB). In some scenarios, the access network device may include a central unit (Central Unit, CU) and/or a distributed unit (Distributed Unit, DU). The CU and DU may be deployed in different places. For example, the DU is remotely deployed in a high-traffic area, and the CU is deployed in a central equipment room. Alternatively, the CU and the DU may be deployed in a same equipment room. Alternatively, the CU and the DU may be different components at a same rack.
   In embodiments of this application, a communication apparatus configured to implement a function of the access network device may be an access network device, or may be an apparatus, for example, a chip system, that can support the access network device in implementing the function. The apparatus may be installed in the access network device.
(3) A core network device is a network device that is configured to implement functions such as mobility management, data processing, session management, and policy and charging and that communicates with a user equipment via an access network device. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.
   In embodiments of this application, a communication apparatus configured to implement a function of the core network device may be a core network device, or may be an apparatus, for example, a chip system, that can support the core network device in implementing the function. The apparatus may be installed in the core network device.
(4) A UE has at least three RRC states: an RRC idle (RRC_IDLE) state, an RRC inactive (RRC_INACTIVE) state, and an RRC connected (RRC_CONNECTED) state. That the RRC state of the UE is the idle state may also be referred to as that the UE is in the RRC idle state. That the RRC state of the UE is the inactive state may also be referred to as that the UE is in the RRC inactive state. That the RRC state of the UE is the connected state may also be referred to as that the UE is in the RRC connected state. If the UE has established an RRC connection, the UE is in the RRC connected state. If the UE does not establish an RRC connection, the UE is in the RRC idle state or the RRC inactive state. The RRC inactive state is introduced for the UE in 5G NR. The RRC state is mainly for a case in which "a UE having infrequent (Infrequent) data transmission is usually kept in the RRC inactive state in a network". When the UE is in different RRC states, different operations are performed. For example, FIG. 1 is a diagram of transition of the three RRC states. When the UE is in the RRC idle state, if the UE needs to perform data transmission, the UE may initiate an RRC connection establishment process to enter the RRC connected state. If the UE in the RRC connected state does not need to perform data transmission, an access network device may release the UE, so that the UE enters the RRC idle state or the RRC inactive state. If the access network device sends a release (Release) message with a suspend indication, for example, an RRC release message with a suspend indication (RRC Release with suspend indication), the UE enters the RRC inactive state. If the access network device sends a release message without a suspend indication, for example, an RRC release message without a suspend indication, the UE enters the RRC idle state. In addition, the UE in the RRC inactive state may further return to the RRC connected state through an RRC connection resume (Resume) process, or the access network device may release the UE in the RRC inactive state to the RRC idle state. For functions and meanings of the RRC idle state, the RRC inactive state, and the RRC connected state, refer to 3GPP TS 38.300 V17.3.0. All related content is introduced into this application. Details are not described herein again.

When the UE is in the RRC idle state or the RRC inactive state, the UE may obtain a paging frame (Paging Frame, PF) through calculation based on a UE ID of the UE, to obtain a location of a paging occasion (Paging Occasion, PO) in the PF, and receive paging on the PO over an NR main link (correspondingly, by invoking a main circuit). In addition, in the RRC connected state, the UE also receives data over the NR main link. The UE may further receive a paging-related wake up message over a WUR link (correspondingly, by invoking a WUR circuit), and receive a paging message after being woken up. In this case, the UE may still be in the RRC idle state or the RRC inactive state. The UE uses a same receiving circuit (which may also be referred to as a receiving module) regardless of whether the UE receives paging in the RRC idle state or the RRC inactive state, or receives the data in the RRC connected state. In this application, that the UE operates on a main receiver/the main circuit may be that the UE operates on a 5G NR link.

For example, FIG. 2 is a diagram of a communication connection between an access network device and a user equipment. As shown in FIG. 2, the access network device 100 includes a wireless transceiver TX/RX 110, and the UE 200 includes a main circuit 202 and a WUR circuit 204. When the UE 200 is connected to the access network device 100 over an NR main link (not shown in the figure) (which may also be referred to as that the UE operates on the NR main link), the main circuit 202 operates. In this case, power consumption of the UE 200 is high. When the UE 200 is connected to the access network device 100 over a WUR link (which may also be referred to as that the UE operates on the WUR link), the WUR circuit 204 operates. When the WUR circuit 204 receives no wake up signal 300 transmitted over the WUR link, the main circuit 202 does not operate. Therefore, power consumption of the UE is low. After the WUR circuit 204 receives the wake up signal 300 transmitted over the WUR link, the WUR circuit 204 enables, by using an internal signal 206, the main circuit 202 to operate, so that the UE 200 can switch to the NR main link in time to operate. It can be learned that, on a premise of the fulfillment of an operating requirement of the UE 200, that the WUR circuit 204 of the UE 200 operates and the main circuit 202 does not operate is maximally ensured, so that the power consumption of the UE 200 can be reduced.

For the user equipment shown in FIG. 2, regardless of whether the user equipment receives paging in an RRC idle state or an RRC inactive state or receives data in an RRC connected state, a main receiver (or referred to as the main circuit) in the user equipment may be used to complete these functions. It may be understood that the main circuit (or the main receiver) is merely a name for differentiation, and a specific name of the main circuit does not limit the protection scope of this application. For ease of description, the main circuit is uniformly used for description below.

In this application, the user equipment receiving a signal over the main circuit is also referred to as operating on the main link, or is also referred to as that the main circuit is in an operating state. A signal received or sent by the user equipment over the main circuit may be referred to as being transmitted on the main link. The main link represents a connection relationship between the user equipment and the access network device, and is a logical concept rather than a physical entity. It may be understood that the main link is merely a name for differentiation, and a specific name of the main link does not limit the protection scope of this application.

In addition, to reduce the power consumption of the user equipment, the user equipment may further receive a signal via a separate small circuit with low power consumption. The small circuit with low power consumption may be implemented by using a separate small circuit or chip with a simple structure, which has low power consumption. The small circuit with low power consumption may be referred to as a wake up radio circuit, or may be referred to as a wake up circuit, or may be referred to as a circuit with low power consumption, or may be referred to as a wake up receiver module, or the like. A name of the small circuit with low power consumption is not limited in this application. In this application, for ease of description, the small circuit with low power consumption is referred to as a WUR circuit. It may be understood that the WUR circuit is merely a name for differentiation, and a specific name of the WUR circuit does not limit the protection scope of this application. For ease of description, the WUR circuit is uniformly used for description below.

In this application, the user equipment receiving the wake up signal over the WUR circuit is referred to as operating on the WUR circuit or the WUR link, or operating on the WUR link, or is referred to as that the WUR circuit is in an operating state. The WUR link represents a connection relationship between the user equipment and a network device, and is a logical concept rather than a physical entity. It may be understood that the main link is merely a name for differentiation, and a specific name of the main link does not limit the protection scope of this application.

The WUR circuit is configured to: receive a wake up signal LP-WUS sent by the access network device, and demodulate wake up indication information based on an information bit carried in the LP-WUS, to wake up a disabled main circuit (or a main circuit in a sleep state) in the user equipment. The LP-WUS usually uses some simple modulation schemes such as on-off keying (On-Off Keying, OOK) or Manchester OOK. Correspondingly, the WUR circuit in the user equipment receives the LP-WUS in an envelope detection manner.

The LP-WUS may be used to wake up at least one user equipment or at least one group of user equipments. In an example, the LP-WUS includes wake up information, and the wake up information represents information related to waking up the user equipment. For example, the wake up information is paging-related information. The wake up information may be used by the user equipment to determine whether to perform a paging receiving procedure; or the wake up information may be used by the user equipment to determine whether to initiate random access. In an example, the wake up information includes information (for example, a UE ID) about one or more user equipments that need to be woken up. The one or more user equipments may also be in a form of a user equipment group (UE group). Correspondingly, the wake up information may include a group identifier of the user equipment group.

In addition, an area range of RAN paging is referred to as a radio access network notification area (RAN-based Notification Area, RNA). Therefore, RAN paging is paging one or more UEs in the RNA. For example, the access network device 100 is a base station (which may also be referred to as an anchor access network device or an anchor base station).

Optionally, a core network device (not shown in the figure) is further disposed on a left side of the access network device 100. The core network device pages the user equipment 200 via the access network device 100. An area range of CN paging is referred to as a tracking area (Tracking Area, TA). Therefore, CN paging is paging one or more UEs in the TA.

In a same cell of a communication system, there may be a UE in an RRC connected state, a UE in an RRC idle state, or a UE in an RRC inactive state. Any two or three of the UEs in the three different RRC states may coexist in the same cell of the communication system. Therefore, in the same cell of the communication system, both CN paging and RAN paging may exist.

However, because a modulation scheme of the LP-WUS is simple and a modulation order is low, a modulated LP-WUS carries less valid information. As a result, a data transmission rate of transmission performing by using the modulated LP-WUS is low, and a single LP-WUS or an LP-WUS in unit duration carries a small quantity of bits. In this case, if there are a large quantity of UEs in the same cell of the communication system, it may not be possible to wake up, in real time, all UEs or most UEs that operate on the WUR link and that are in the same cell, and consequently, paging cannot be performed on all the UEs or most UEs in the same cell in real time subsequently.

For example, there are 1000 UEs in a first cell, and 800 UEs operate on the WUR link. A quantity of bits carried in the single LP-WUS or the LP-WUS in the unit duration can indicate only 600 UEs. In this case, 200 UEs that operate on the WUR link cannot be woken up by the single LP-WUS or the LP-WUS in the unit duration in real time, and therefore cannot be paged in real time subsequently.

To resolve the foregoing disadvantages, two solutions are provided. In a first solution, a length of a UE ID carried by the single LP-WUS is shortened (for example, a quantity of occupied bits is reduced). In this way, a same LP-WUS can carry more UE IDs, so that more UEs that operate on the WUR link are woken up in real time. Further, in subsequent paging, paging can be performed on more UEs in real time. For example, previously, the UE ID carried by the single LP-WUS occupies 12 bits. In the first solution, the UE ID carried by the single LP-WUS occupies 10 bits. In this way, the quantity of bits carried by the single LP-WUS or the LP-WUS in the unit duration can indicate more UEs, so that more UEs that operate on the WUR link can be woken up in real time. Further, in subsequent paging, paging can be performed on more UEs in real time.

In a second solution, UEs in the same cell are grouped, and the LP-WUS carries UE grouping information such as a group ID, to ensure that any UE that operates on the WUR link can be woken up in real time. Further, in subsequent paging, paging can be performed on more UEs in real time. For example, there are 1000 UEs in a first cell. The 1000 UEs are grouped, 10 UEs are grouped into one group, and there are 100 groups. Each group has a group ID. In this way, a quantity of bits carried by the single LP-WUS or the LP-WUS in the unit duration can indicate all UE groups, and can cover all the UEs, so that more UEs that operate on the WUR link can be woken up in real time. Further, in subsequent paging, paging can be performed on more UEs in real time.

Through deep research and analysis, the first solution has the following technical problem: Even if a shorter UE ID is used, when there are a larger quantity of UEs in the same cell of the communication system, paging cannot be performed on all UEs or most UEs in the same cell in real time. For example, when the quantity of UEs in the first cell increases from 1000 to 3000, wake up still cannot be performed, in real time, on all UEs or most UEs that operate on the WUR link and that are in the same cell, and consequently, paging cannot be performed on all the UEs or most UEs in the same cell in real time subsequently.

In addition, the second solution has the following technical problem: All UEs in a same group are woken up, but actually, only one or more UEs in the group may need to be woken up and paged. Consequently, wake up of other UEs in the group is false wake up. In addition, the other UEs in the group switch to the NR main link after being woken up and wait to receive a paging message, and switch back to the WUR link if no paging message is received in specific duration. As a result, power consumption of the other UEs in the group is increased. Power consumption of the UE is high when the UE switches between the WUR link and the NR main link (because the NR main link is powered on/off), and is even far greater than power consumption of the UE when the UE completely operates on the NR main link. For example, there are 1000 UEs in a first cell, the 1000 UEs are grouped, 10 UEs are grouped into one group, and there are 100 groups. All the 100 groups of UEs operate on the WUR link. If only a 1^{st} UE in a 1^{st} group needs to be paged actually, 10 UEs in the 1^{st} group are still woken up. Consequently, the other nine UEs in the 1^{st} group are woken up by mistake and switch between the WUR link and the NR main link. As a result, power consumption of the other nine UEs in the 1^{st} group is increased.

To resolve the foregoing technical problems, this application provides a paging method, a user equipment, a network device, and a communication system. Therefore, on a premise of reducing power consumption as much as possible, any UE, in a cell, that operates on a WUR link can be woken up in real time, and paging can be performed on any one or more UEs or all UEs in the same cell in real time.

The following describes the technical solutions of this application in detail with reference to the accompanying drawings. The technical solutions of this application include Embodiment 1 and Embodiment 2.

The technical solutions of this application are specific to a same cell. For ease of description, the following uses an example in which the same cell is a first cell for description. A UE camps on the first cell, and the first cell is one of one or more cells of an access network device. The access network device is one of one or more access network devices that communicate with a core network device.

In the technical solutions of this application, a UE capacity upper limit needs to be preset in the CN device and the access network device. The UE capacity upper limit is a capacity upper limit of UEs to be paged, and may be protocol-predefined. In other words, the UE capacity upper limit is a fixed value after being set. When an upper limit of a quantity of UEs in an RNA is considered, a definition of the UE capacity upper limit may be determined based on an upper limit of a quantity of UEs in a tracking area TA and the upper limit of the quantity of UEs in the RNA. When an upper limit of a quantity of UEs in an RNA is not considered, a definition of the UE capacity upper limit may be determined based on an upper limit of a quantity of UEs in a tracking area TA. For ease of description, the following uses a case in which the upper limit of the quantity of UEs in the RNA is considered as an example for description. However, a person skilled in the art should understand that a case in which the upper limit of the quantity of UEs in the RNA is not considered also falls within the scope of this application, and merely simple replacement is needed.

Correspondingly, when a current quantity of UEs in the RNA is considered, a first quantity of UEs is a sum of a current quantity of UEs in the tracking area TA and a current quantity of UEs in the RNA, that is, the first quantity of UEs=the current quantity of UEs in the tracking area TA+the current quantity of UEs in the RNA. When the quantity of UEs in the RNA is not considered, a first quantity of UEs is a current quantity of UEs in the tracking area TA, that is, the first quantity of UEs=the current quantity of UEs in the tracking area TA. Whether the current quantity of UEs in the RNA is considered may be determined by operators or the like based on a specific situation. The current quantity of UEs in the RNA is a current quantity of UEs that support a WUR function in the RNA. Regardless of whether the current quantity of UEs in the RNA is considered, the current quantity of UEs in the tracking area TA is a current quantity of UEs that support the WUR function in the tracking area TA. For ease of description, the following uses a case in which the current quantity of UEs in the RNA is considered as an example for description. However, a person skilled in the art should understand that a case in which the current quantity of UEs in the RNA is not considered also falls within the scope of this application, and only simple replacement is needed.

It should be noted that, if the upper limit of the quantity of UEs in the RNA is considered in the definition of the UE capacity upper limit, the current quantity of UEs in the RNA also needs to be considered in a definition of the first quantity of UEs. If the upper limit of the quantity of UEs in the RNA is not considered in the definition of the UE capacity upper limit, the current quantity of UEs in the RNA is not considered in a definition of the first quantity of UEs.

It should be noted that the first quantity of UEs and a first UE are two different concepts, and the first quantity of UEs is not a quantity of first UEs.

### Embodiment 1

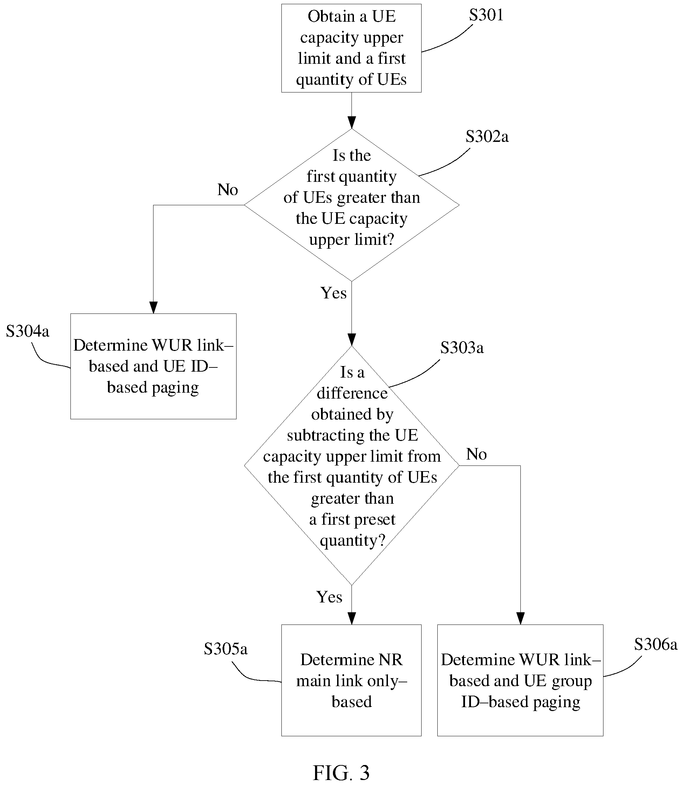

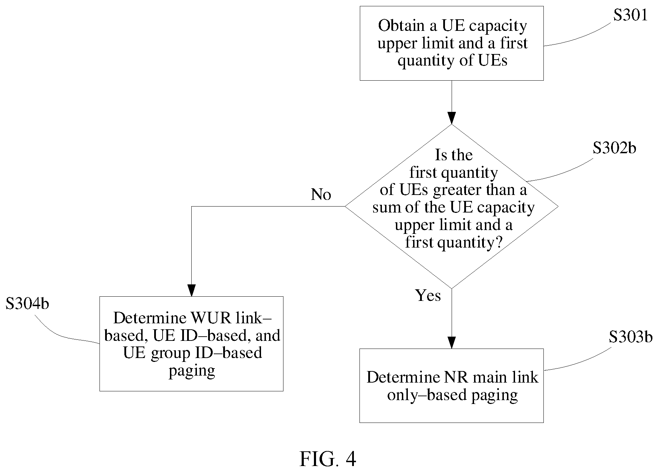

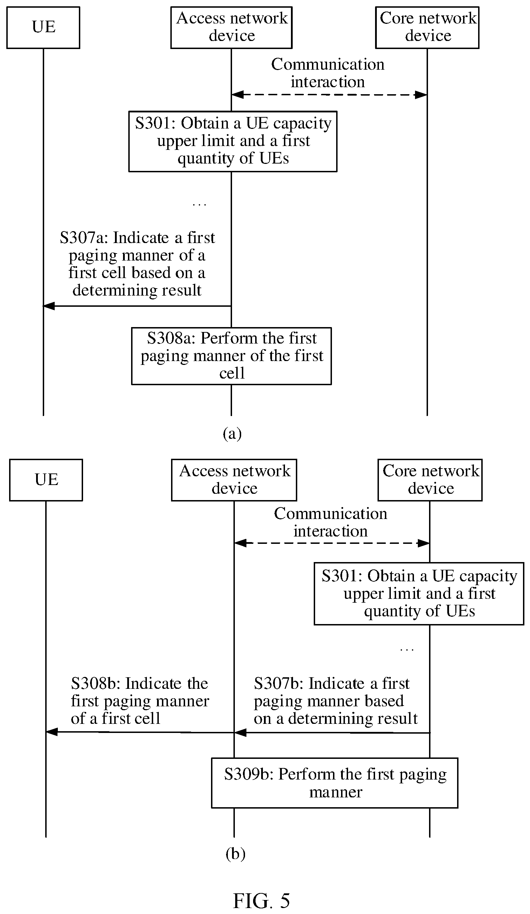

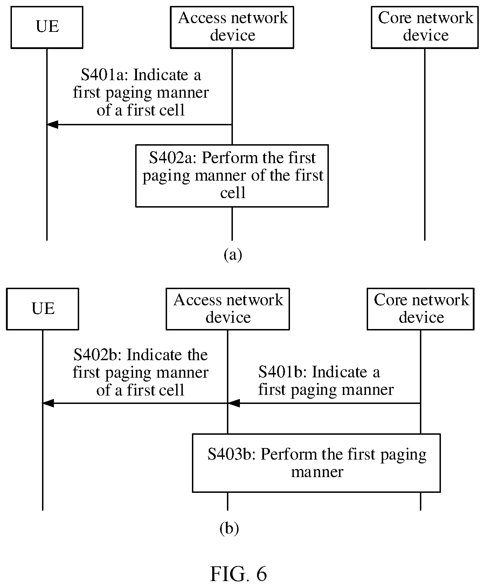

Embodiment 1 includes Implementation 1 and Implementation 2. Implementation 1 relates to FIG. 3 to FIG. 5. Implementation 2 relates to FIG. 6. FIG. 3 and FIG. 4 are diagrams of two different example classification procedures in Implementation 1. FIG. 5 is a diagram of an example paging procedure in Implementation 1. FIG. 6 is a diagram of an example paging procedure in Implementation 2.

### Implementation 1

The procedure shown in FIG. 3 is an optional procedure in Implementation 1. The procedure shown in FIG. 3 may be performed by a CN device or a RAN device. As shown in FIG. 3, the procedure includes the following steps.

S301: Obtain a UE capacity upper limit and a first quantity of UEs.

For definitions of the UE capacity upper limit and the first quantity of UEs, refer to the foregoing content. Details are not described herein again.

Alternatively, if the UE capacity upper limit is always fixed, the UE capacity upper limit only needs to be obtained for the first time, and then the UE capacity upper limit does not need to be obtained again.

Alternatively, if the UE capacity upper limit is fixed in a time period, the UE capacity upper limit only needs to be obtained for the first time in the time period, and then the UE capacity upper limit does not need to be obtained in the time period again; and the step is performed cyclically until a change of the UE capacity upper limit or after duration (where for example, the duration is a periodicity) corresponding to the time period. For example, the time period is [T1, T1+T], the duration is T, and the periodicity is T. In the time period [T1, T1+T], the UE capacity upper limit needs to be obtained only once, and in a next time period [T1+T, T1+2T], the UE capacity upper limit needs to be obtained only once. The step is performed cyclically.

Optionally, when an update or change notification is received, the UE capacity upper limit and the first quantity of UEs are obtained.

S302a: Decide or determine whether the first quantity of UEs is greater than the UE capacity upper limit.

If the first quantity of UEs is greater than the UE capacity upper limit, S303a is performed; otherwise, S304a is performed.

S303a: Decide or determine whether a difference obtained by subtracting the UE capacity upper limit from the first quantity of UEs is greater than a first preset quantity.

If the difference is greater than the first preset quantity, S305a is performed; otherwise, S306a is performed.

Alternatively, S303a may be replaced with the following: "Decide or determine whether a proportion of a difference obtained by subtracting the UE capacity upper limit from the first quantity of UEs to the UE capacity upper limit is greater than a first preset proportion"; or "decide or determine whether an increase proportion of the first quantity of UEs to the UE capacity upper limit is greater than a first preset proportion".

After the replacement, correspondingly, if the proportion is greater than the first preset proportion, S305a is performed; otherwise, S306a is performed.

S304a: Determine WUR link-based and UE ID-based paging.

For example, the UE ID may be a 5G serving temporary mobile subscriber identity (5G S-Temporary Mobile Subscriber Identity, 5G-S-TMSI), or may be a short UE ID dedicated to the WUR link. This is not limited in this application.

S305a: Determine NR main link only-based paging.

For example, the NR main link-based paging may be early indication (Paging Early Indication, PEI) grouping-based paging, or may be paging message-based paging.

S306a: Determine WUR link-based and UE group ID-based paging.

For example, the UE group ID may be calculated by using a preset calculation formula to obtain a group ID corresponding to a UE, or may be allocated by the CN device or an anchor RAN device to the UE. This is not limited in this application.

For example, the procedure steps shown in FIG. 3 and the replacement steps thereof may be performed in real time. For example, the first quantity of UEs and the UE capacity upper limit may be obtained in real time (S301). For example, the first quantity of UEs may also be obtained in real time based on the foregoing replacement steps. Further, at least one of S302a to S306a and the replacement steps thereof may also be performed in real time.

For example, the procedure steps shown in FIG. 3 and the replacement steps thereof may be periodically performed.

In S304a, S305a, and S306a, a first paging manner is determined. The first paging manner is WUR link-based paging.

Further, the first paging manner is any one of the following: (1) WUR link-based and UE ID-based paging; (2) NR main link only-based paging; and (3) WUR link-based and UE group ID-based paging.

It should be noted that at least one of the three branches S304a, S305a, and S306a in FIG. 3 may constitute a separate procedure, and the separate procedure also falls within the scope of this application. For example, the procedure may include only S301, S302a, and S304a, or may include only S301, S302a, S303a, and S305a, or may include only S301, S302a, S303a, and S306a, or may include only S301, S302a, S304a, S303a, and S305a.

It should be noted that the procedure shown in FIG. 3 and the foregoing described steps (including the replacement steps) are merely examples. Sometimes, it is also possible not to perform all or some of the foregoing procedure steps.

For example, one of S304, S305, or S306 may be directly performed based on at least one of a geographical location, historical data experience, or the like of the RAN device. For example, if the RAN device is deployed in a no man's land, S304a may be directly performed, and S301 and S302 do not need to be performed. For another example, S306 may be directly performed based on historical data of the RAN device, and S301, S302, and S303 do not need to be performed.

The procedure shown in FIG. 4 is an alternative procedure of the procedure shown in FIG. 3 in Implementation 1. The procedure shown in FIG. 4 may be performed by a CN device or a RAN device. As shown in FIG. 4, the procedure includes the following steps.

S301: Obtain a UE capacity upper limit and a first quantity of UEs.

S302b: Decide or determine whether the first quantity of UEs is greater than a sum of the UE capacity upper limit and a first quantity.

For example, the first quantity may be preset.

If the first quantity of UEs is greater than the sum, S303b is performed; otherwise, S304b is performed.

S303b: Determine NR main link only-based paging.

S304b: Determine WUR link-based, UE ID-based, and UE group ID-based paging.

In S303b and S304b, a first paging manner is determined. The first paging manner is WUR link-based paging.

Further, the first paging manner is any one of the following: (1) WUR link-based, UE ID-based, and UE group ID-based paging; and (2) NR main link only-based paging.

It should be noted that at least one of the two branches S303b and S304b in FIG. 4 may constitute a separate procedure, and the separate procedure also falls within the scope of this application. For example, the procedure may include only S301, S302b, and S303b, or may include only S301, S302b, and S304b.

It should be noted that the procedure shown in FIG. 4 and the foregoing described steps (including replacement steps) are merely examples. Sometimes, it is also possible not to perform all or some of the foregoing procedure steps.

For example, S303b or S304b may be directly performed based on at least one of a geographical location, historical data experience, or the like of the RAN device. For example, if the RAN device is deployed in a no man's land, S304b may be directly performed, and S301 and S302b do not need to be performed. For another example, S303b may be directly performed based on historical data of the RAN device, and S301 and S302b do not need to be performed.

After the first paging manner is determined, the first paging manner is indicated to a UE. The following describes the indication of the first paging manner to the UE with reference to FIG. 5. FIG. 5 shows two different implementations (a) and (b), which correspond to different execution bodies.

As shown in (a) in FIG. 5, the procedure includes the following steps.

S301: An access network device obtains a UE capacity upper limit and a first quantity of UEs.

Then, a first paging manner of a first cell is determined based on the procedure steps shown in FIG. 3 or FIG. 4 and the foregoing corresponding replacement steps.

It should be noted that, in (a) in FIG. 5, because the procedure is performed by the access network device, determining the first paging manner is specifically determining the first paging manner of the first cell.

S307a: The access network device indicates the first paging manner of the first cell to a UE based on a determining result.

The access network device sends a first indication message to the UE, where the first indication message indicates the first paging manner of the first cell.

"..." in (a) in FIG. 5 represents corresponding procedure steps in FIG. 3 or FIG. 4 that are omitted. For example, if the determining result is that a paging manner of the first cell is determined as "WUR link-based and UE ID-based paging", "..." in (a) in FIG. 5 represents S302a and S304a in FIG. 3, in other words, S302a and S304a are omitted between S301 and S307a.

Optionally, the access network device may obtain the UE capacity upper limit and the first quantity of UEs based on communication interaction with a core network device. In other words, before S301, the communication interaction between the access network device and the core network device may further exist.

Optionally, the access network device may obtain the UE capacity upper limit and the first quantity of UEs not based on the communication interaction with the core network device. A specific example is specifically described in descriptions with reference to FIG. 6.

For example, the first paging manner is any one of the following: (1) WUR link-based and UE ID-based paging; (2) NR main link only-based paging; and (3) WUR link-based and UE group ID-based paging.

For example, the first paging manner is any one of the following: (1) WUR link-based, UE ID-based, and UE group ID-based paging; and (2) NR main link only-based paging.

S308a: The access network device performs the first paging manner of the first cell.

For example, after the determining result is that the first paging manner of the first cell is determined as "WUR link-based and UE ID-based paging", the access network device performs WUR link-based and UE ID-based RAN paging.

The procedure shown in (b) in FIG. 5 is similar to the procedure shown in (a) in FIG. 5, and a difference lies in different execution bodies. In (a) in FIG. 5, the procedure is performed by the access network device, and in (b) in FIG. 5, the procedure is performed by a core network device.

As shown in (b) in FIG. 5, the procedure includes the following steps.

S301: The core network device obtains a UE capacity upper limit and a first quantity of UEs.

Then, a first paging manner is determined based on the procedure steps shown in FIG. 3 or FIG. 4 and the foregoing corresponding replacement steps.

It should be noted that, in (b) in FIG. 5, because the procedure is performed by the core network device, a specific cell for which the first paging manner is used is not determined through determining of the first paging manner.

For example, the first paging manner is any one of the following: (1) WUR link-based and UE ID-based paging; (2) NR main link only-based paging; and (3) WUR link-based and UE group ID-based paging.

For example, the first paging manner is any one of the following: (1) WUR link-based, UE ID-based, and UE group ID-based paging; and (2) NR main link only-based paging.

S307b: The core network device indicates the first paging manner to an access network device based on a determining result.

"..." in (b) in FIG. 5 represents corresponding procedure steps in FIG. 3 or FIG. 4 that are omitted. For example, if the determining result is that a paging manner of a first cell is determined as "WUR link-based and UE ID-based paging", "..." in (b) in FIG. 5 represents S302a and S304a in FIG. 3, in other words, S302a and S304a are omitted between S301 and S307a.

The core network device sends a second indication message to the access network device, where the second indication message indicates the first paging manner.

S308b: The access network device indicates the first paging manner of the first cell to a UE.

The access network device sends a first indication message to the UE, where the first indication message indicates the first paging manner of the first cell.

S309b: The core network device and the access network device perform the first paging manner of the first cell.

For example, the core network device sends a paging message for a specific UE to the access network device, and after receiving the paging message, the access network device sends the paging message to the specific UE. The first paging manner is used during paging.

Content that is not described in detail in (b) in FIG. 5 is the same as corresponding content in (a) in FIG. 5. Details are not described herein again.

### Implementation 2

FIG. 6 shows two different implementations (a) and (b), which correspond to different execution bodies. As shown in (a) in FIG. 6, the procedure includes the following steps.

S401a: An access network device indicates a first paging manner of a first cell.

The access network device sends a first indication message to a UE, where the first indication message indicates the first paging manner of the first cell.

The first paging manner is WUR link-based paging.

For example, the first paging manner of the first cell is any one of the following: (1) WUR link-based and UE ID-based paging; (2) NR main link only-based paging; and (3) WUR link-based and UE group ID-based paging.

For example, the first paging manner of the first cell is any one of the following: (1) WUR link-based, UE ID-based, and UE group ID-based paging; and (2) NR main link only-based paging.

The determining of the first paging manner of the first cell is not based on the procedure steps in FIG. 3 or FIG. 4 or the replacement steps.

Optionally, the first paging manner of the first cell may be configured by another device. For example, the another device is an operation, administration and maintenance OAM (Operation, Administration and Maintenance, OAM) device, and the OAM device may be referred to as a network management device.

Optionally, that the access network device blindly configures the first paging manner of the first cell is that the access network device blindly configures a paging manner for the first cell.

S402a: The access network device performs the first paging manner of the first cell.

For example, after the first paging manner of the first cell is blindly configured as "WUR link-based and UE ID-based paging", the access network device performs WUR link-based and UE ID-based RAN paging.

Optionally, before S401a in (a) in FIG. 6, a core network device may indicate information about a first quantity of UEs to the access network device, where the information is used by the access network device to determine the first paging manner of the first cell.

The information about the first quantity of UEs may be determined by considering a current quantity of UEs in an RNA and a current quantity of UEs in a TA, or may be determined by considering the current quantity of UEs in the TA without considering the current quantity of UEs in the RNA. This is not limited in this application.

Optionally, the information about the first quantity of UEs may indicate the first quantity of UEs: whether "the first quantity of UEs is not greater than a UE capacity upper limit", or "the first quantity of UEs is greater than the UE capacity upper limit and is not greater than a sum of the UE capacity upper limit and a first preset quantity", or "the first quantity of UEs is greater than the UE capacity upper limit and is greater than the sum of the UE capacity upper limit and the first preset quantity". In this case, the access network device may determine the first paging manner of the first cell based on the information about the first quantity of UEs. In other words, the first paging manner of the first cell is determined based on the procedure steps shown in FIG. 3 and the foregoing corresponding replacement steps.

Optionally, the information about the first quantity of UEs may indicate the first quantity of UEs: whether "the first quantity of UEs is not greater than a sum of a UE capacity upper limit and a first quantity" or "the first quantity of UEs is greater than the sum of the UE capacity upper limit and the first quantity". In this case, the access network device may determine the first paging manner of the first cell based on the information about the first quantity of UEs. In other words, the first paging manner of the first cell is determined based on the procedure steps shown in FIG. 4 and the foregoing corresponding replacement steps.

In the foregoing manner, the core network device determines a value relationship between the current quantity of UEs and the UE capacity upper limit, and indicates the value relationship to the access network device. Alternatively, the core network device indicates only the current quantity of UEs to the access network device, and the access network device determines a value relationship between the current quantity of UEs and the UE capacity upper limit.

Optionally, the information about the first quantity of UEs may indicate a quantity range to which the first quantity of UEs belongs, for example, indicate whether the quantity range to which the first quantity of UEs belongs is a "first range", a "second range", or a "third range", where the "first range" corresponds to "the first quantity of UEs being not greater than the UE capacity upper limit", the "second range" corresponds to "the first quantity of UEs being greater than the UE capacity upper limit, and being not greater than the sum of the UE capacity upper limit and the first preset quantity", and the "third range" corresponds to "the first quantity of UEs being greater than the UE capacity upper limit, and being greater than the sum of the UE capacity upper limit and the first preset quantity". In this case, the access network device may determine the value relationship between the current quantity of UEs and the UE capacity upper limit based on the quantity range, to determine the first paging manner of the first cell. In other words, the first paging manner of the first cell is determined based on the procedure steps shown in FIG. 3 and the foregoing corresponding replacement steps. It should be noted that the "first range", the "second range", and the "third range" may be further divided into smaller ranges. For example, the first range is 0 to 100, the first range is further divided into a first range a and a first range b, the first range a is 0 to 50, and the first range b is 51 to 100. Both the first range a and the first range b correspond to "the first quantity of UEs being not greater than the UE capacity upper limit". Division of the quantity range may be predefined in a protocol, or may be indicated by the access network device to the core network device in advance. For example, the division of the quantity range may be as follows: The first range is 0 to 100, the second range is 101 to 150, and the third range is greater than 150.

Optionally, the information about the first quantity of UEs may indicate a quantity range to which the first quantity of UEs belongs, for example, whether the quantity range to which the first quantity of UEs belongs is a "first range" or a "second range", where the "first range" corresponds to "the first quantity of UEs being not greater than the sum of the UE capacity upper limit and the first quantity", and the "second range" corresponds to "the first quantity of UEs being greater than the sum of the UE capacity upper limit and the first quantity". In this case, the access network device may determine the value relationship between the current quantity of UEs and the UE capacity upper limit based on the quantity range, to determine the first paging manner of the first cell. In other words, the first paging manner of the first cell is determined based on the procedure steps shown in FIG. 4 and the foregoing corresponding replacement steps. It should be noted that the "first range" and the "second range" may be further divided into smaller ranges. For example, the first range is 0 to 100, the first range is further divided into a first range a and a first range b, the first range a is 0 to 50, and the first range b is 51 to 100. Both the first range a and the first range b correspond to "the first quantity of UEs being not greater than the UE capacity upper limit". Division of the quantity range may be predefined in a protocol, or may be indicated by the access network device to the core network device in advance. For example, the division of the quantity range may be as follows: The first range is 0 to 150, and the second range is greater than 150.

For example, the core network device may obtain the information about the first quantity of UEs based on the current quantity of UEs in the TA, or based on the current quantity of UEs in the TA and the current quantity of UEs in the RNA, and further indicate the information about the first quantity of UEs.

The procedure shown in (b) in FIG. 6 is similar to the procedure shown in (a) in FIG. 6, and a difference lies in different execution bodies. In (a) in FIG. 6, the procedure is performed by the access network device, and in (b) in FIG. 6, the procedure is performed by a core network device.

As shown in (b) in FIG. 6, the procedure includes the following steps.

S401b: The core network device indicates a first paging manner.

The core network device sends a second indication message to an access network device, where the second indication message indicates the first paging manner.

For example, the first paging manner is any one of the following: (1) WUR link-based and UE ID-based paging; (2) NR main link only-based paging; and (3) WUR link-based and UE group ID-based paging.

For example, the first paging manner is any one of the following: (1) WUR link-based, UE ID-based, and UE group ID-based paging; and (2) NR main link only-based paging.

The determining of the first paging manner is not based on the procedure steps in FIG. 3 or FIG. 4 or the replacement steps.

It should be noted that, because the procedure is performed by the core network device, in S401b, a specific cell for which the first paging manner is used is not determined through determining of the first paging manner.

Optionally, the first paging manner may be configured by another device. For example, the another device is an operation, administration and maintenance OAM device, and the OAM device may be referred to as a network management device.

Optionally, the access network device blindly configures the first paging manner, that is, blindly configures a paging manner.

S402b: The access network device indicates the first paging manner of a first cell to a UE.

The access network device sends a first indication message to the UE, where the first indication message indicates the first paging manner of the first cell.

S403b: The core network device and the access network device perform the first paging manner of the first cell.

In S403b, the core network device sends a first paging message to the access network device, to indicate to page a specific UE in the first paging manner. After receiving the first paging message, the access network device pages the specific UE in the first paging manner.

Content that is not described in detail in (b) in FIG. 6 is the same as corresponding content in (a) in FIG. 6. Details are not described herein again.

For example, the core network device may determine the first paging manner based on a current quantity of UEs in a TA, or based on the current quantity of UEs in the TA and a current quantity of UEs in an RNA. In other words, the first paging manner is determined based on the procedure steps shown in FIG. 3 or FIG. 4 and the foregoing corresponding replacement steps.

In Embodiment 1, a paging manner, indicated to the UE, of the first cell may include at least one of the following manners:
(1) The access network device indicates WUR link-based paging of the first cell to the UE, and the paging on the WUR link is based on the UE ID.
(2) The access network device indicates WUR link-based paging of the first cell to the UE, and the paging on the WUR link is based on the UE group ID.
(3) The access network device indicates NR main link only-based paging of the first cell to the UE.

NR main link only-based paging refers to paging not based on the WUR link.

Any one of the foregoing (1) to (3) may be indicated by broadcasting the first indication message by the access network device.

If the first indication message includes a first field, it indicates that the access network device indicates WUR link-based paging of the first cell to the UE. If the first indication message includes no first field, it indicates that the access network device indicates NR main link only-based paging of the first cell to the UE. It may also be understood as that the first paging manner is the NR main link only-based paging.

If the first indication message includes a first field, and a value of the first field is a first value, it indicates that the access network device indicates WUR link-based paging of the first cell to the UE, and the paging on the WUR link is based on the UE ID. It may also be understood as that the first paging manner is WUR link-based paging, and the paging on the WUR link is based on the UE ID.

If the first indication message includes a first field, and a value of the first field is a second value, it indicates that the access network device indicates WUR link-based paging of the first cell to the UE, and paging on the WUR link is based on the UE group ID. It may also be understood as that the first paging manner is WUR link-based paging, and the paging on the WUR link is based on the UE group ID.

Further, in Embodiment 1, the paging manner, indicated to the UE, of the first cell may further include at least one of the following manner:
(4) The access network device indicates WUR link-based paging of the first cell to the UE, and the paging on the WUR link is based on the UE ID and the UE group ID.

Similarly, the foregoing (4) may still be indicated by broadcasting the first indication message by the access network device.

If the first indication message includes a first field, and a value of the first field is a third value, it indicates that the access network device indicates WUR link-based paging of the first cell to the UE, and the paging on the WUR link is based on the UE ID and the UE group ID. It may also be understood as that the first paging manner is WUR link-based paging, and the paging on the WUR link is based on the UE ID and the UE group ID.

In addition to a single-field manner such as the first field in the first indication message, a dual-field manner such as the first field and a second field may be used for indication. Details are as follows:

If the first indication message includes only the first field, it indicates that the access network device indicates WUR link-based paging of the first cell to the UE, and the paging on the WUR link is based on the UE ID. It may also be understood as that the first paging manner is WUR link-based paging, and the paging on the WUR link is based on the UE ID.

If the first indication message includes only the second field, it indicates that the access network device indicates WUR link-based paging of the first cell to the UE, and the paging on the WUR link is based on the UE group ID. It may also be understood as that the first paging manner is WUR link-based paging, and the paging on the WUR link is based on the UE group ID.

If the first indication message includes the first field and the second field, it indicates that the access network device indicates WUR link-based paging of the first cell to the UE, and the paging on the WUR link is based on the UE ID and the UE group ID. It may also be understood as that the first paging manner is WUR link-based paging, and the paging on the WUR link is based on the UE ID and the UE group ID.

If the first indication message does not include the first field or the second field, it indicates that the access network device indicates NR main link only-based paging of the first cell to the UE. It may also be understood as that the first paging manner is NR main link only-based paging.

Alternatively, in Embodiment 1, a paging manner, indicated to the UE, of the first cell may include at least one of the following manners:
(I) The access network device indicates WUR link-based paging of the first cell to the UE, and the paging on the WUR link is based on the UE ID and the UE group ID.
(II) The access network device indicates NR main link only-based paging of the first cell to the UE.

The foregoing (I) and (II) may be indicated by broadcasting the first indication message by the access network device.

If the first indication message includes a first field, it indicates that the access network device indicates WUR link-based paging of the first cell to the UE, and the paging on the WUR link is based on the UE ID and the UE group ID. It may also be understood as that the first paging manner is WUR link-based paging, and the paging on the WUR link is based on the UE ID and the UE group ID.

If the first indication message includes no first field, it indicates that the access network device indicates NR main link only-based paging of the first cell to the UE. It may also be understood as that the first paging manner is NR main link only-based paging.

Alternatively, in Embodiment 1, a paging manner, indicated to the UE, of the first cell may include at least one of the following manners:
(i) The access network device indicates WUR link-based paging of the first cell to the UE, and the paging on the WUR link is based on the UE ID.
(ii) The access network device indicates NR main link only-based paging of the first cell to the UE.

The foregoing (i) and (ii) may be indicated by broadcasting the first indication message by the access network device.

If the first indication message includes a first field, it indicates that the access network device indicates WUR link-based paging of the first cell to the UE, and the paging on the WUR link is based on the UE ID. It may also be understood as that the first paging manner is WUR link-based paging, and the paging on the WUR link is based on the UE ID.

If the first indication message includes no first field, it indicates that the access network device indicates NR main link only-based paging of the first cell to the UE. It may also be understood as that the first paging manner is NR main link only-based paging.

Alternatively, in Embodiment 1, a paging manner, indicated to the UE, of the first cell may include at least one of the following manners:
(A) The access network device indicates WUR link-based paging of the first cell to the UE, and paging on the WUR link is based on the UE group ID.
(B) The access network device indicates NR main link only-based paging of the first cell to the UE.

The foregoing (A) and (B) may be indicated by broadcasting the first indication message by the access network device.

If the first indication message includes a first field, it indicates that the access network device indicates WUR link-based paging of the first cell to the UE, and paging on the WUR link is based on the UE group ID. It may also be understood as that the first paging manner is WUR link-based paging, and the paging on the WUR link is based on the UE group ID.

If the first indication message includes no first field, it indicates that the access network device indicates NR main link only-based paging of the first cell to the UE. It may also be understood as that the first paging manner is NR main link only-based paging.

Technical effects of Embodiment 1 are as follows: For CN paging or RAN paging, different paging manners are determined based on different cases, paging is performed based on the determined different paging manners, and the short UE ID and/or the UE group ID are further introduced, to effectively expand coverage, implement accurate wake up, and reduce false wake up. Therefore, on a premise of reducing power consumption as much as possible, any UE, in a cell, that operates on the WUR link can be woken up in real time, and paging can be performed on any one or more UEs or all UEs in the same cell in real time.

### Embodiment 2

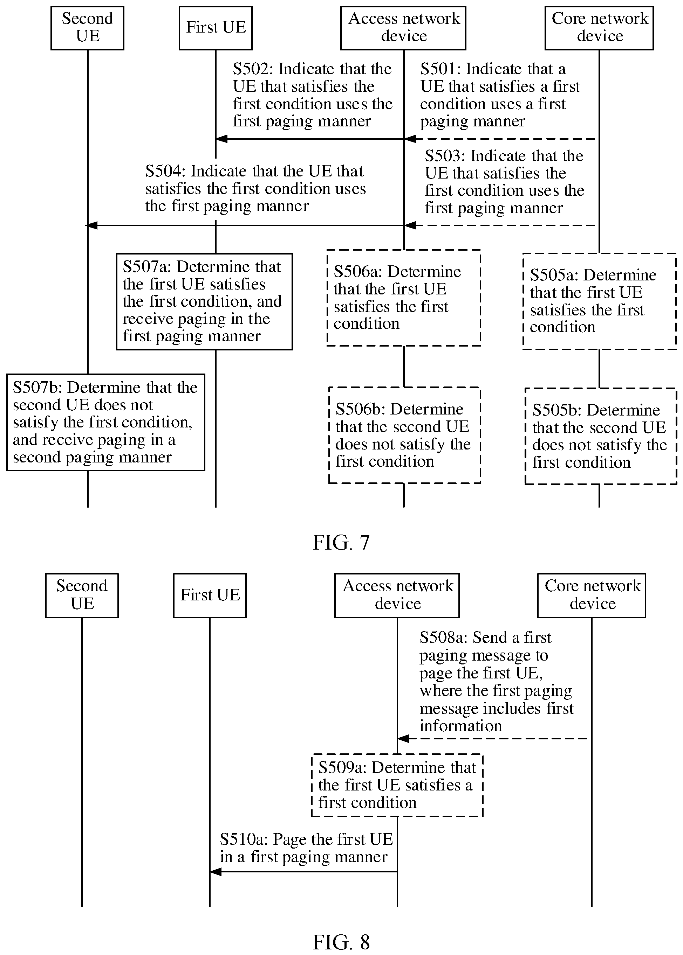

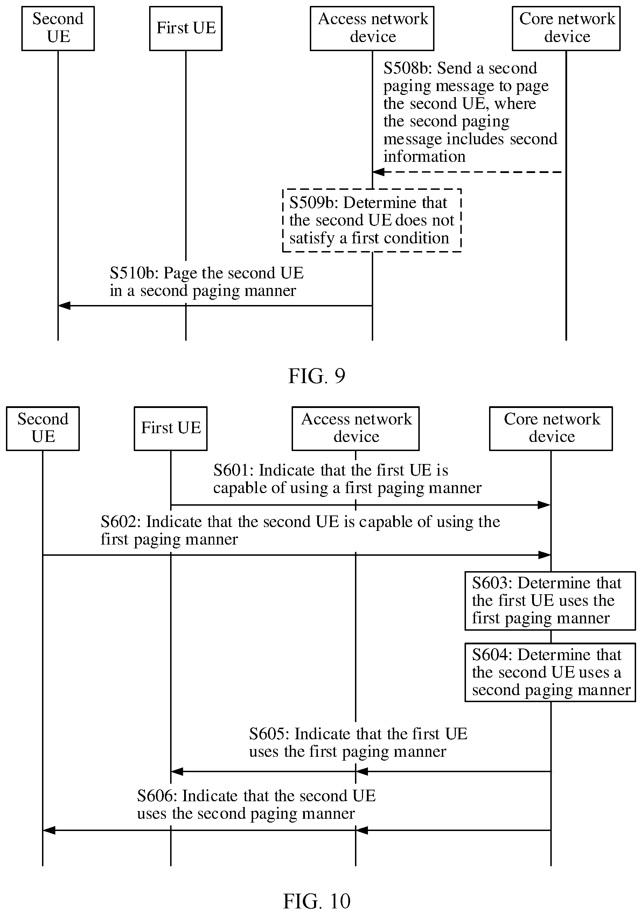

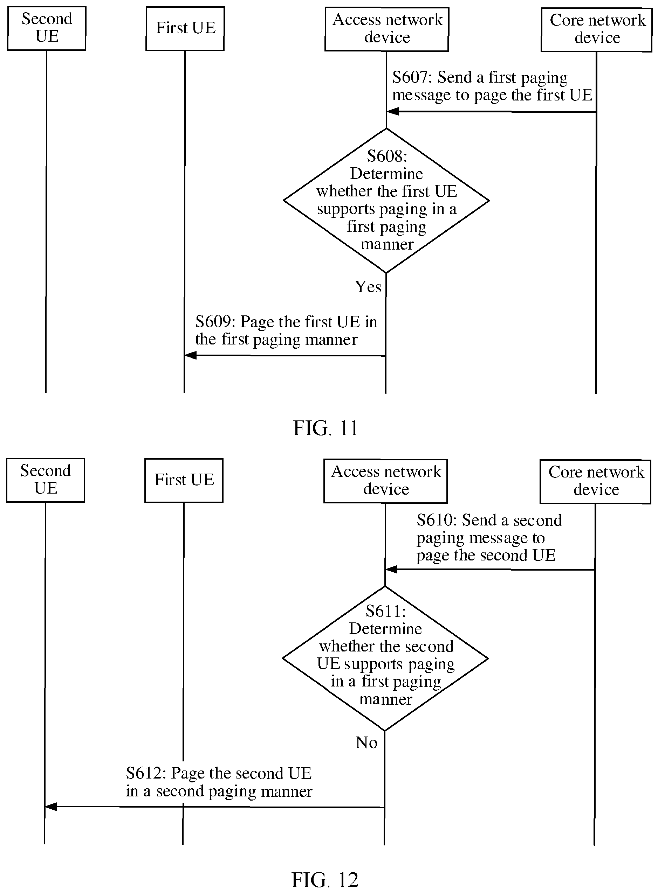

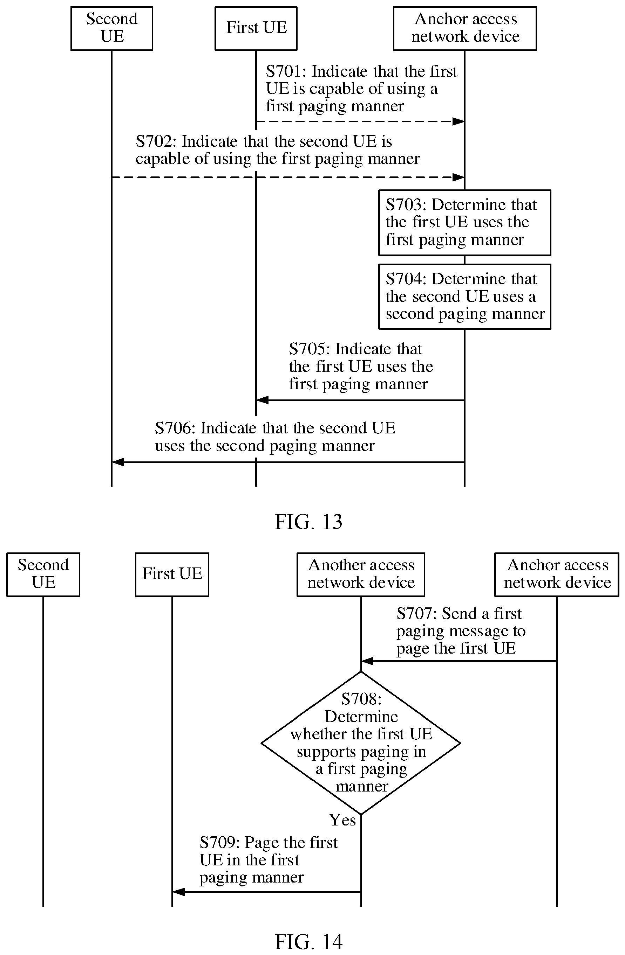

Embodiment 2 includes Implementation 3 and Implementation 4. Implementation 3 relates to FIG. 7 to FIG. 9. Implementation 4 relates to FIG. 10 to FIG. 15. FIG. 7 is a diagram of an example procedure before paging in Implementation 3. FIG. 8 and FIG. 9 are diagrams of example paging procedures in Implementation 3. FIG. 10 and FIG. 13 are diagrams of two different example procedures before paging in Implementation 4. FIG. 11, FIG. 12, FIG. 14, and FIG. 15 are diagrams of example paging procedures in Implementation 4.

### Implementation 3

The procedure shown in FIG. 7 is a part of the procedure in Implementation 3. In FIG. 7, both a first UE and a second UE camp on a first cell of an access network device, and the access network device communicates with a core network device. It should be noted that more UEs may camp on the first cell. The following uses only the first UE and the second UE as an example.

As shown in FIG. 7, an indication procedure before paging includes the following steps.

S501: The core network device indicates that a UE that satisfies a first condition uses a first paging manner.

The core network device indicates a rule, and the rule is that the UE that satisfies the first condition uses the first paging manner.

The first paging manner is WUR link-based paging.

It should be noted that the first paging manner in Embodiment 2 and the first paging manner in Embodiment 1 have different ranges.

For example, in Embodiment 2, the first paging manner includes one of the following: WUR link-based and UE ID-based paging; WUR link-based and UE group ID-based paging; or WUR link-based, UE ID-based, and UE group ID-based paging.

For example, the core network device indicates, to the access network device, that the UE that satisfies the first condition uses the first paging manner.

The core network device sends a second message to the access network device, where the second message indicates that the UE that satisfies the first condition uses the first paging manner.

S502: The access network device indicates, to the first UE, that the UE that satisfies the first condition uses the first paging manner.

The access network device indicates a rule, and the rule is that the UE that satisfies the first condition uses the first paging manner.

The access network device indicates to a UE camping on the first cell. In addition, the first UE is the UE camping on the first cell. The first cell is one of one or more cells of the access network device.

For example, the access network device broadcasts a first message in a broadcast manner, where the first message indicates that the UE that satisfies the first condition uses the first paging manner.

S503: The core network device indicates that the UE that satisfies the first condition uses the first paging manner.

S503 and S501 may be considered as one step. In other words, the core network device indicates, to the access network device, that the UE that satisfies the first condition uses the first paging manner. Expanded content of S503 is the same as expanded content of S501. Details are not described herein again.

S501 and S503 are optional steps. The procedure may include S501 and S503, or may not include S501 or S503.

S504: The access network device indicates, to the second UE, that the UE that satisfies the first condition uses the first paging manner.

The second UE is the UE camping on the first cell.

S504 and S502 may be considered as one step. In other words, the access network device indicates, in a broadcast manner, that the UE that satisfies the first condition uses the first paging manner.

S505a: The core network device determines that the first UE satisfies the first condition.

For example, the core network device determines, based on pre-received related information about the first UE, that the first UE satisfies the first condition.

S506a: The access network device determines that the first UE satisfies the first condition.

For example, the access network device determines, based on pre-received related information about the first UE, that the first UE satisfies the first condition.

Both S505a and S506a are optional steps. In this procedure, only one step needs to be selected from S505a and S506a.

S507a: The first UE determines that the first UE satisfies the first condition, and receives paging in the first paging manner.

S505b: The core network device determines that the second UE does not satisfy the first condition.

For example, the core network device determines, based on pre-received related information about the second UE, that the second UE does not satisfy the first condition.

Alternatively, S505a and S505b may be one step.

S506b: The access network device determines that the second UE does not satisfy the first condition.

For example, the access network device determines, based on pre-received related information about the second UE, that the second UE does not satisfy the first condition.

Alternatively, S506a and S506b may be one step.

Both S505b and S506b are optional steps. In this procedure, only one step needs to be selected from S505b and S506b. However, it needs to correspond to the selection in S505a and S506a.

S507b: The second UE determines that the second UE does not satisfy the first condition, and receives paging in a second paging manner.

The second paging manner is NR main link only-based paging.

In addition, the first condition in Implementation 3 may include at least one of the following: (1) a UE whose discontinuous reception (discontinuous reception, DRX) cycle is less than or equal to a first threshold, where the DRX cycle of the UE may be a UE-specific (UE-Specific) DRX cycle, and the first threshold may be a default DRX cycle value of a cell serving the UE (where the first cell is used as an example herein); (2) a UE that does not support extended DRX (extended DRX, eDRX), or a UE for which eDRX is not configured (in other words, a UE that does not negotiate a configured eDRX cycle value with the core network device); (3) a reduced capability (Reduced Capability, RedCap) UE; and (4) a UE whose allowed slice service determined with the core network device includes ultra-reliable low-latency communication (Ultra-Reliable Low-Latency Communication, URLLC) and/or massive internet of things (Massive Internet of Things, MIoT) and/or high-performance machine-type communication (High-Performance Machine-Type Communication, HMTC).

It should be noted that the UE-specific DRX cycle, the default DRX cycle value of the cell serving the UE, the RedCap UE, the URLLC, the MIoT, the HMTC, and the like in the foregoing (1) to (4) are all technical terms in this field. For specific meanings, refer to 3GPP TS 23.501 V18.0.0. Details are not described herein again.

It should be noted that, for (1) and (2), a UE with a longer DRX cycle is less sensitive to latency, and a longer DRX cycle has implemented lower power consumption. Therefore, a UE that is latency-sensitive and is capable of operating on a WUR link is preferentially enabled to operate on the WUR link. For (3), the reduced capability UE generally has a lower requirement on power consumption. Therefore, the reduced capability UE is preferentially enabled to operate on the WUR link. For (4), the UE in (4) is more sensitive to latency and has a lower requirement on power consumption. Therefore, the UE in (4) is preferentially enabled to operate on the WUR link.

For example, the first condition may be defined in a protocol, and is preconfigured in the core network device, the access network device, the first UE, and the second UE. Alternatively, the first condition may be preconfigured in the core network device, and is notified to the access network device when the core network device performs S501 and S503, and then the access network device notifies the first UE and the second UE. Alternatively, the first condition may be preconfigured in the access network device, and is notified to the first UE and the second UE when the access network device performs S502 and S504.

It should be noted that the UE that satisfies the first condition needs to be capable of using the first paging manner in advance.

Further, the UE that satisfies the first condition has the capability of WUR link-based paging. The WUR link-based paging includes: (1) WUR link-based and UE ID-based paging; (2) WUR link-based and UE group ID-based paging; (3) WUR link-based, UE ID-based, and UE group ID-based paging; and the like.

For example, S502 or S504 is carried in the first message, and the access network device indicates, by using the first message, the UE that satisfies the first condition to receive paging in the first paging manner, and indicates specific content of the first condition. As shown in S507a, after receiving the first message, the first UE determines that the first UE satisfies the first condition, and receives paging in the first paging manner. As shown in S507b, after receiving the first message, the second UE determines that the second UE does not satisfy the first condition, and then receives paging in the second paging manner.

Optionally, before S501 and S503, the core network device may pre-receive related information about the first UE and the second UE.

Optionally, before S502 and S504, the access network device may pre-receive related information about the first UE and the second UE.

After the procedure in FIG. 7 is executed, different paging procedures may exist depending on whether paging is CN paging or RAN paging. With reference to FIG. 8 or FIG. 9, the following uses CN paging as an example for description.

As shown in FIG. 8, the paging procedure includes the following steps.

S508a: The core network device sends a first paging message to the access network device to page the first UE, where the first paging message includes first information.

The first paging message includes an ID (also referred to as a first UE ID) of the first UE.

For example, the first information includes the related information about the first UE, for example, a DRX cycle of the first UE, or whether the first UE is a reduced capability UE.

For example, the first information includes a first result indicating that the first UE satisfies the first condition. Optionally, the first result is a result that satisfies at least one of the foregoing (1) to (4).

For example, the first information includes information indicating the access network device to wake up the first UE by using an LP-WUS, or includes information indicating the access network device to use the first paging manner.

S509a: The access network device determines that the first UE satisfies the first condition.

S509a is an optional step.

For example, when S505a is performed in the procedure in FIG. 7, the first information in S508a includes the first result. In this case, S509a does not need to be performed.

For example, when S505a is not performed in the procedure in FIG. 7, the first information in S508a includes the related information about the first UE, and S509a may be S506a. In this case, FIG. 8 shows a specific execution procedure of S506a in FIG. 7.

For example, when S505a is not performed and S506a is performed in the procedure in FIG. 7, the first information in S508a includes the related information about the first UE, and S509a does not need to be performed.

In other words, the step of determining that the first UE satisfies the first condition may be performed before or after the access network device receives the first paging message.

S510a: The access network device pages the first UE in the first paging manner.

For determining of the first paging manner, refer to the determining process in Embodiment 1. Details are not described herein again.

As shown in FIG. 9, the paging procedure includes the following steps.

S508b: The core network device sends a second paging message to the access network device to page the second UE, where the second paging message includes second information.

The second paging message includes an ID (also referred to as a second UE ID) of the second UE.

For example, the second information includes the related information about the second UE, for example, a DRX cycle of the second UE, or whether the second UE is a reduced capability UE.

For example, the second information includes a second result indicating that the second UE does not satisfy the first condition. Optionally, the second result is a result that satisfies none of the foregoing (1) to (4).

For example, the second information does not include information indicating the access network device to wake up the second UE by using an LP-WUS, or does not include information indicating the access network device to use the first paging manner, or includes information indicating the access network device to use the second paging manner.

S509b: The access network device determines that the second UE does not satisfy the first condition.

S509b is an optional step.

For example, when S505b is performed in the procedure in FIG. 7, the second information in S508b includes the second result. In this case, S509b does not need to be performed.

For example, when S505b is not performed in the procedure in FIG. 7, the second information in S508b includes the related information about the second UE, and S509b may be S506b. In this case, FIG. 9 shows a specific execution procedure of S506b in FIG. 7.

For example, when S505b is not performed and S506b is performed in the procedure in FIG. 7, the second information in S508b includes the related information about the second UE, and S509b does not need to be performed.

In other words, the step of determining that the second UE does not satisfy the second condition may be performed before or after the access network device receives the second paging message.

S510b: The access network device pages the second UE in the second paging manner.

The second paging manner is NR main link only-based paging. In Embodiment 2, the second paging manner is different from the first paging manner.

It should be noted that the procedure steps shown in FIG. 8 or FIG. 9 are merely examples, and are not intended to limit the scope of this application.

Correspondingly, after the procedure in FIG. 7 is executed, if paging is RAN paging, when sending the first paging message to page the UE, an anchor access network device may further send the first paging message to another access network device to page the UE. The first paging message may include the first information. The anchor access network device or the another access network device may determine whether a to-be-paged UE satisfies the first condition. If the first condition is satisfied, the to-be-paged UE uses the first paging manner. If the first condition is not satisfied, the to-be-paged UE uses the second paging manner.

It should be noted that the procedures in FIG. 7, FIG. 8, or FIG. 9 and the corresponding procedure steps may be an independent technical solution. Any two or more procedures in FIG. 7, FIG. 8, or FIG. 9 and the corresponding procedure steps may be combined with each other to form different technical solutions.

### Implementation 4

In Implementation 4, the procedure shown in FIG. 10 is a part of the procedure in Implementation 4. In FIG. 10, both a first UE and a second UE camp on a first cell of an access network device, and the access network device communicates with a core network device. It should be noted that more UEs may camp on the first cell. The following uses only the first UE and the second UE as an example.

As shown in FIG. 10, the procedure includes the following steps.

S601: The first UE indicates, to the core network device, that the first UE is capable of using a first paging manner.

The first UE indicates, to the access network device, that the first UE is capable of using the first paging manner, and the access network device indicates, to the core network device, that the first UE is capable of using the first paging manner. A non-access stratum (Non-Access Stratum, NAS) message may indicate that the first UE is capable of using the first paging manner. Logically, the NAS message is a message between the first UE and the core network device.

The first paging manner is WUR link-based paging.

Further, the first paging manner is any one of the following: (1) WUR link-based and UE ID-based paging; (2) WUR link-based and UE group ID-based paging; and (3) WUR link-based, UE ID-based, and UE group ID-based paging.

Alternatively, in S601, the first UE may indicate first capability information of the first UE to the core network device, and the first capability information includes that the first UE is capable of using the first paging manner.

S602: The second UE indicates, to the core network device, that the second UE is capable of using the first paging manner.

The second UE indicates, to the access network device, that the second UE is capable of using the first paging manner, and the access network device indicates, to the core network device, that the second UE is capable of using the first paging manner. A non-access stratum (Non-Access Stratum, NAS) message may indicate that the second UE is capable of using the first paging manner. Logically, the NAS message is a message between the second UE and the core network device.

Alternatively, in S602, the second UE may indicate second capability information of the second UE to the core network device, and the second capability information includes that the second UE is capable of using the first paging manner.

Alternatively, S602 is an optional step.

S603: The core network device determines that the first UE uses the first paging manner.

For example, the core network device may determine, based on a first condition and the first capability information, whether the first UE satisfies the first condition. After the core network device determines that the first UE satisfies the first condition, the core network device determines that the first UE uses the first paging manner.

Optionally, the first condition includes at least one of the following: a UE state in a network (for example, a current quantity of UEs in the network) or a feature of a UE (for example, a paging probability of the UE, a DRX cycle of the UE, service information of the UE, and/or type information of the UE).

S604: The core network device determines that the second UE uses a second paging manner.

For example, the core network device may determine, based on the first condition and the second capability information, whether the second UE satisfies the first condition. After the core network device determines that the second UE does not satisfy the first condition, the core network device determines that the second UE uses the second paging manner. The second paging manner is NR main link only-based paging.

S605: The core network device indicates that the first UE uses the first paging manner.

For example, the core network device indicates, to the access network device, that the first UE uses the first paging manner, and the access network device indicates, to the first UE, that the first UE uses the first paging manner. A non-access stratum (Non-Access Stratum, NAS) message may indicate that the first UE uses the first paging manner. Logically, the NAS message is a message between the first UE and the core network device.

For example, the core network device indicates, by using a first indication message, that the first UE uses the first paging manner.

For example, the first indication message includes first indication information, and the first indication information indicates that the first UE uses the first paging manner.

Alternatively, the core network device indicates, by using a short first UE ID, that the first UE uses the first paging manner. For example, if the core network device indicates the short first UE ID to the first UE, the core network device indicates that the first UE uses the first paging manner. In this case, no additional first indication information is needed (that is, implicit indication is performed, and the indication is implemented by using the short UE ID), or the short first UE ID is the first indication information. The short first UE ID is a short UE ID that is allocated by the core network device to the first UE and that is dedicated to a WUR link. The short first UE ID belongs to the short UE ID based on length division.

S606: The core network device indicates that the second UE uses the second paging manner.

For example, the core network device indicates, to the access network device, that the second UE uses the second paging manner, and the access network device indicates, to the second UE, that the second UE uses the second paging manner. A non-access stratum (Non-Access Stratum, NAS) message may indicate that the second UE uses the second paging manner. Logically, the NAS message is a message between the second UE and the core network device.

For example, the core network device indicates, by using a second indication message, that the second UE uses the second paging manner.

For example, the second indication message includes second indication information, and the second indication information indicates that the second UE uses the second paging manner.

Alternatively, the core network device indicates, by using a short second UE ID, that the second UE uses the second paging manner. For example, if the core network device indicates the short second UE ID to the second UE, the core network device indicates that the second UE uses the second paging manner. In this case, no additional second indication information is needed, or the short second UE ID is the second indication information. The short second UE ID is a short UE ID that is allocated by the core network device to the second UE and that is dedicated to a WUR link. The short second UE ID belongs to the short UE ID based on length division.

A sequence of S601 and S602 in FIG. 10 is merely an example, and a sequence of S601 and S602 is not limited. In other words, S602 may be performed before S601. Similarly, the same applies to a sequence of S603 and S604 and a sequence of S605 and S606. In addition, S604 may be performed after S605.

In short, a sequence of steps in the figures in this application is merely an example.

For CN paging, after the procedure in FIG. 10 is executed, the procedure shown in FIG. 11 and/or the procedure shown in FIG. 12 may be performed. As shown in FIG. 11, the paging procedure includes the following steps.

S607: The core network device sends a first paging message to the access network device to page the first UE.

For example, the first paging message includes a first UE ID and configuration information of the first UE, and the configuration information of the first UE includes configuring the first UE to use the first paging manner, or includes the short first UE ID (where there is a short first UE ID indicating that the first UE uses the first paging manner).

S608: The access network device determines whether the first UE supports paging in the first paging manner.

After receiving the first paging message, the access network device determines whether the first UE supports paging in the first paging manner.

If the access network device determines that the first UE supports paging in the first paging manner, S609 is performed; otherwise, the access network device does not page the first UE in the first paging manner.

Alternatively, S608 may be replaced with the following: The access network device determines whether the first UE supports WUR link-based paging. The WUR link-based paging includes: (1) WUR link-based and UE ID-based paging; (2) WUR link-based and UE group ID-based paging; (3) WUR link-based, UE ID-based, and UE group ID-based paging; and the like. If the access network device determines that the first UE supports WUR link-based paging, S609 is performed; otherwise, the access network device pages the first UE in the second paging manner.

S609: The access network device pages the first UE in the first paging manner.

For example, the access network device determines use of the first paging manner based on the configuration information of the first UE. In other words, the first paging manner has been determined based on the procedure in Embodiment 1, but the use of the first paging manner is determined in S609.

For example, the access network device pages the first UE in the first paging manner in the first cell, and the access network device supports paging in the first paging manner in the first cell. In other words, the access network device can page the first UE in the first paging manner only when it is determined that the first UE supports paging in the first paging manner, and the access network device supports paging in the first paging manner in the first cell.

As shown in FIG. 12, the paging procedure includes the following steps.

S610: The core network device sends a second paging message to the access network device to page the second UE.

For example, the second paging message includes an ID of the second UE and configuration information of the second UE, and the configuration information of the second UE includes configuring the second UE to use the second paging manner, or does not include a short second UE ID (where there is no short second UE ID indicating that the second UE uses the second paging manner).

The second paging manner is NR main link only-based paging.

S611: The access network device determines whether the second UE supports paging in the first paging manner.

After receiving the second paging message, the access network device determines whether the second UE supports paging in the first paging manner.

If the access network device determines that the second UE does not support paging in the first paging manner, S612 is performed; otherwise, the access network device pages the second UE in the first paging manner.

Alternatively, S611 may be replaced with the following: The access network device determines whether the second UE supports WUR link-based paging. The WUR link-based paging includes: (1) WUR link-based and UE ID-based paging; (2) WUR link-based and UE group ID-based paging; (3) WUR link-based, UE ID-based, and UE group ID-based paging; and the like. If the access network device determines that the second UE does not support WUR link-based paging, S612 is performed; otherwise, the access network device pages the second UE in the first paging manner.

S612: The access network device pages the second UE in the second paging manner.

For example, the access network device determines the second paging manner based on the configuration information of the second UE and uses the second paging manner.

It should be noted that there is no limitation on a sequence between S610 to S612 and S607 to S609, to be specific, S607 to S609 may be performed before or after S610 to S612. This is not limited in this application.

In addition to determining, by the core network device in FIG. 10 to FIG. 12, whether the first UE satisfies the condition and whether the second UE satisfies the second condition, an anchor access network device may alternatively determine whether the first UE satisfies the condition and whether the second UE satisfies the second condition, and the anchor access network device separately sends the first paging message and the second paging message to the first UE and the second UE. For details, refer to FIG. 13 to FIG. 15. FIG. 13 shows a procedure before paging.

In FIG. 13, both a first UE and a second UE camp on a first cell of an anchor access network device, and the anchor access network device may communicate with another access network device. It should be noted that more UEs may camp on the first cell. The following uses only the first UE and the second UE as an example.

As shown in FIG. 13, the procedure before paging includes the following steps.

S701: The first UE indicates, to the anchor access network device, that the first UE is capable of using a first paging manner.

The first paging manner is WUR link-based paging.

Further, the first paging manner is any one of the following: (1) WUR link-based and UE ID-based paging; (2) WUR link-based and UE group ID-based paging; and (3) WUR link-based, UE ID-based, and UE group ID-based paging.

Alternatively, in S701, the first UE may indicate first capability information of the first UE to the anchor access network device, and the first capability information includes that the first UE is capable of using the first paging manner.

Alternatively, S701 may be replaced with the following: The first UE indicates, to the anchor access network device, that the first UE is capable of using WUR link-based paging.

The WUR link-based paging includes: (1) WUR link-based and UE ID-based paging; (2) WUR link-based and UE group ID-based paging; (3) WUR link-based, UE ID-based, and UE group ID-based paging; and the like.

S702: The second UE indicates, to the anchor access network device, that the second UE is capable of using the first paging manner.

Alternatively, in S702, the second UE may indicate second capability information of the second UE to the anchor access network device, and the second capability information includes that the second UE is capable of using the first paging manner.

Alternatively, S702 may be replaced with the following: The second UE indicates, to the anchor access network device, that the second UE is capable of using WUR link-based paging.

Optionally, S702 is an optional step.

S703: The anchor access network device determines that the first UE uses the first paging manner.

For example, the anchor access network device may determine, based on a first condition and the first capability information, whether the first UE satisfies the first condition. After the anchor access network device determines that the first UE satisfies the first condition, the anchor access network device determines that the first UE uses the first paging manner.

Optionally, the first condition includes at least one of the following: a UE state in a network (for example, a current quantity of UEs in the network) or a feature of a UE (for example, a paging probability of the UE, a DRX cycle of the UE, service information of the UE, and/or type information of the UE).

S704: The anchor access network device determines that the second UE uses a second paging manner.

For example, the anchor access network device may determine, based on the first condition and the second capability information, whether the second UE satisfies the first condition. If the anchor access network device determines that the second UE does not satisfy the first condition, the anchor access network device determines that the second UE uses the second paging manner.

S705: The anchor access network device indicates, to the first UE, that the first UE uses the first paging manner.

For example, the anchor access network device sends a first indication message to the first UE, where the first indication message indicates that the first UE uses the first paging manner.

For example, the first indication message includes a first UE ID and first indication information, the first indication information indicates that the first UE uses the first paging manner, and the first UE ID indicates the first UE.

For example, the first indication message includes the first UE ID, and the first UE ID is a short UE ID. The anchor access network device indicates, to the first UE by using the short first UE ID, that the first UE uses the first paging manner. For example, if the anchor access network device indicates the short first UE ID to the first UE, the anchor access network device indicates that the first UE uses the first paging manner. In this case, no first indication information is needed (that is, implicit indication is performed, and the indication is implemented by using the short UE ID), or the first UE ID is the first indication information. The short first UE ID is a short UE ID that is allocated by the core network device or the anchor access network device to the first UE and that is dedicated to a WUR link. The short first UE ID belongs to the short UE ID based on length division.

S706: The anchor access network device indicates, to the second UE, that the second UE uses the second paging manner.

For example, the anchor access network device sends a second indication message to the second UE, where the second indication message indicates that the second UE uses the second paging manner.

For example, the second indication message includes a second UE ID and second indication information, the second UE ID indicates the second UE, and the second indication information indicates that the second UE uses the second paging manner.

For example, the second indication message includes the second UE ID, and the second UE ID is a short UE ID. The anchor access network device indicates, to the second UE by using the short second UE ID, that the second UE uses the second paging manner. For example, if the anchor access network device does not indicate the short second UE ID to the second UE, the anchor access network device indicates that the second UE uses the second paging manner. In this case, no second indication information is needed (that is, implicit indication is performed, and the indication is implemented by using the short UE ID), or the second UE ID is the second indication information. The short second UE ID is a short UE ID that is allocated by the core network device or the anchor access network device to the second UE and that is dedicated to the WUR link. The short second UE ID belongs to the short UE ID based on length division.

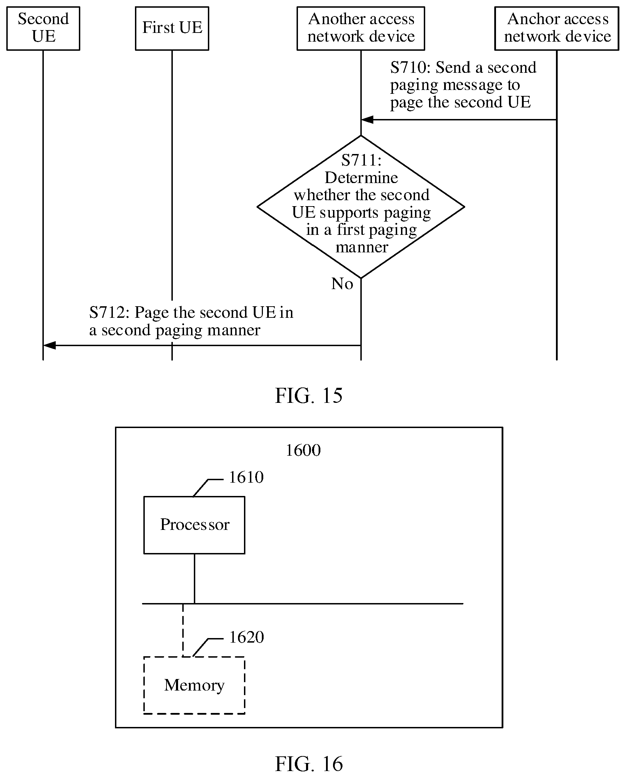

For RAN paging, after the procedure in FIG. 13 is executed, the procedure shown in FIG. 14 and/or the procedure shown in FIG. 15 may be performed. As shown in FIG. 14, the paging procedure includes the following steps.

S707: The anchor access network device sends a first paging message to page the first UE.

The first paging message includes the first UE ID, and the first UE ID is an ID of the first UE.

The anchor access network device not only sends the first paging message to another access network device, but also may directly send the first paging message to the first UE without using the another access network device. In some networks, if there is no other access network device, the first paging message only needs to be sent to the first UE.

S708: The another access network device determines whether the first UE supports paging in the first paging manner.

For example, the another access network device may be one or more specific access network devices other than the anchor access network device. For example, if the another access network device is a first access network device, S708 is that the first access network device determines whether the first UE supports paging in the first paging manner. The first access network device is an access network device other than the anchor access network device.

Whether the first UE supports paging in the first paging manner is whether the first UE enables paging in the first paging manner. The access network device may perform paging in the first paging manner only when the first UE enables using paging in the first paging manner; otherwise, the access network device does not perform paging in the first paging manner. A meaning of "support" is the same as that of "enable".

If the another access network device determines that the first UE supports paging in the first paging manner, S709 is performed. If the another access network device determines that the first UE does not support paging in the first paging manner, the second paging manner is used to page the first UE.

Alternatively, S708 may be replaced with the following: The another access network device determines whether the first UE supports WUR link-based paging. The WUR link-based paging includes: (1) WUR link-based and UE ID-based paging; (2) WUR link-based and UE group ID-based paging; (3) WUR link-based, UE ID-based, and UE group ID-based paging; and the like. If the another access network device determines that the first UE supports WUR link-based paging, S709 is performed; otherwise, the another access network device pages the first UE in the second paging manner.

S709: The another access network device pages the first UE in the first paging manner.

For example, the another access network device pages the first UE in the first paging manner in the first cell, and the another access network device supports paging in the first paging manner in the first cell. In other words, the another access network device can page the first UE in the first paging manner only when it is determined that the first UE supports paging in the first paging manner, and the another access network device supports paging in the first paging manner in the first cell.

As shown in FIG. 15, the paging procedure includes the following steps.

S710: The anchor access network device sends a second paging message to page the second UE.

The second paging message includes the second UE ID, and the second UE ID is an ID of the second UE.

The anchor access network device not only sends the second paging message to another access network device, but also may directly send the second paging message to the second UE without using the another access network device. In some networks, if there is no other access network device, the second paging message only needs to be sent to the second UE.

For example, the second paging message further includes configuration information of the second UE, and the configuration information of the second UE includes configuring the second UE to use the second paging manner, or does not include a short second UE ID (where there is no short second UE ID indicating that the second UE uses the second paging manner).

For example, the anchor access network device sends the second paging message by using the second UE ID and second indication information, the second UE ID is used to page the second UE, and the second indication information indicates that the second UE uses the second paging manner.

S711: The another access network device determines whether the second UE supports paging in the first paging manner.

If the another access network device determines that the second UE supports paging in the first paging manner, S709 is performed. If the another access network device determines that the second UE does not support paging in the first paging manner, the second paging manner is used to page the second UE.

Alternatively, S711 may be replaced with the following: The another access network device determines whether the second UE supports WUR link-based paging. The WUR link-based paging includes: (1) WUR link-based and UE ID-based paging; (2) WUR link-based and UE group ID-based paging; (3) WUR link-based, UE ID-based, and UE group ID-based paging; and the like. If the another access network device determines that the second UE does not support WUR link-based paging, S712 is performed; otherwise, the another access network device pages the second UE in the first paging manner.

S712: The another access network device pages the second UE in the second paging manner.

The second paging manner is NR main link only-based paging.

The anchor access network device not only sends the second paging message to the second UE, but also may send the second paging message to the another access network device. In some networks, if there is no other access network device, the second paging message only needs to be sent to the second UE.

Technical effects of Embodiment 2 are as follows: In addition to the technical effects of Embodiment 1, the following is further included: In one or two of the foregoing classification cases, for UEs capable of operating on the WUR link, only some of the UEs are selected for paging in a corresponding paging manner, and not all the UEs are paged in a corresponding paging manner. In this way, a quantity of UEs on the WUR link can be controlled. For example, the quantity of UEs on the WUR link can be flexibly adjusted by adjusting the first condition.

Unless otherwise particularly specified or mutually exclusive, all or any part (including all or any part of different implementations) of the foregoing embodiments provided in this application may be freely combined, and technical solutions obtained through combination also fall within the scope of this application.

The method provided in embodiments of this application is applicable to the following user equipment UE. For example, FIG. 16 shows a user equipment 1600 according to this application. For example, the user equipment 1600 includes at least one processor 1610 and a memory 1620. The processor 1610 is coupled to the memory 1620. The coupling in this embodiment of this application may be a communication connection, an electrical connection, or another form. Specifically, the memory 1620 is configured to store program instructions. The processor 1610 is configured to invoke the program instructions stored in the memory 1620, the user equipment 1600 is enabled to perform the steps performed by the user equipment in the method provided in embodiments of this application. It should be understood that the user equipment 1600 may be configured to implement the method provided in embodiments of this application. For related features, refer to the foregoing descriptions. Details are not described herein again. The user equipment 1600 may be at least one of the foregoing network device and user equipment.

Alternatively, the user equipment 1600 may not include the memory 1620, in other words, the user equipment 1600 is not provided with the memory 1620, the program instructions are stored on another device or a cloud, and before the user equipment 1600 runs the program instructions, the program instructions are received from the another device or the cloud.

An embodiment of this application further provides a chip. The chip may include an input interface, an output interface, and a processing circuit. In this embodiment of this application, the input interface and the output interface may complete signaling or data interaction, and the processing circuit may complete generation and processing of the signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of this application further provides a processor, configured to be coupled to a memory. The memory stores instructions. When the processor runs the instructions, the processor is enabled to perform the method and function in any one of the foregoing embodiments.

An embodiment of this application further provides a computer program product including instructions. When the computer program product runs on a computer, the computer is enabled to perform the method and function in any one of the foregoing embodiments.

An embodiment of this application further provides a computer-readable storage medium. The computer-readable storage medium stores computer instructions. When a processor runs the instructions, the processor is enabled to perform the method and function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although aspects of embodiments of this application are shown and described as block diagrams or flowcharts, or represented by some other illustrations, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of program modules may be combined or split between program modules as needed. Machine-executable instructions for the program module may be executed locally or in a distributed device. In the distributed device, the program module may be locally located and located in a remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on the computer, partly on the computer, as an independent software package, partly on the computer and partly on a remote computer, or entirely on the remote computer or a server.

In the context of this application, the computer program code or related data may be included in any proper carrier, so that a device, an apparatus, or a processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this application are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that features and functions of two or more apparatuses according to this application may be specific in one apparatus. Instead, features and functions of one apparatus described above may be further specific in a plurality of apparatuses.

In embodiments of this application, as used in the specification and the appended claims of this application, singular expressions "a", "the", "the foregoing", "this", and "the one" also intend to include expressions such as "one or more", unless the context explicitly indicates the opposite. It should be further understood that, in the following embodiments of this application, "at least one" and "one or more" mean one or more (including two). The term "and/or" is used to describe an association relationship between associated objects and represents that three relationships may exist. For example, A and/or B may represent the following three cases: Only A exists, both A and B exist, and only B exists, where A and B may be singular or plural. The character "/" generally indicates an "or" relationship between the associated objects.

Reference to "an embodiment", "some embodiments" or the like described in this specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the word such as "example" or "for example" is used to represent giving an example, an illustration, or a description. Any embodiment or design solution described as an "example" or "for example" in embodiments of this application should not be construed as being more preferred or having more advantages than another embodiment or design solution. Exactly, use of the word such as "example" or "for example" is intended to present a related concept in a specific manner.

The foregoing has described the implementations of this application. The foregoing descriptions are examples, are not exhaustive, and are not limited to the disclosed implementations. Many modifications and changes are apparent to a person of ordinary skill in the art without departing from the scope of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A paging method, applied to an access network device, wherein the method comprises:
sending a first indication message, wherein the first indication message indicates a first paging manner of a first cell; and
paging a user equipment UE in the first paging manner, wherein
the UE camps on the first cell, and the first cell is one of one or more cells of the access network device; and
the first paging manner comprises any one of the following:
(1) wake up WUR link-based and user equipment identifier UE ID-based paging; (2) NR main link only-based paging; and (3) WUR link-based and user equipment UE group identifier ID-based paging;
(1) WUR link-based, UE ID-based, and UE group ID-based paging; and (2) NR main link only-based paging;
(1) wake up WUR link-based and user equipment identifier UE ID-based paging; and (2) NR main link only-based paging; or
(1) WUR link-based and UE group ID-based paging; and (2) NR main link only-based paging.

2. The method according to claim 1, wherein the first paging manner is a paging manner determined from at least two paging manners.

3. The method according to claim 1 or 2, wherein
if the first indication message comprises no first field, the first paging manner is the NR main link only-based paging;
if the first indication message comprises a first field, and a value of the first field is a first value, the first paging manner is the WUR link-based paging, and the paging on the WUR link is based on the UE ID; or
if the first indication message comprises a first field, and a value of the first field is a second value, the first paging manner is the WUR link-based paging, and the paging on the WUR link is based on the UE group ID.

4. The method according to claim 1 or 2, wherein
if the first indication message comprises only a first field, the first paging manner is the WUR link-based paging, and the paging on the WUR link is based on the UE ID;
if the first indication message comprises only a second field, the first paging manner is the WUR link-based paging, and the paging on the WUR link is based on the UE group ID;
if the first indication message comprises a first field and a second field, the first paging manner is the WUR link-based paging, and the paging on the WUR link is based on the UE ID and the UE group ID; or
if the first indication message neither comprises a first field nor a second field, the first paging manner is the NR main link only-based paging.

5. The method according to claim 1 or 2, wherein when the first paging manner comprises any one of the following: (1) the WUR link-based, UE ID-based, and UE group ID-based paging; and (2) the NR main link only-based paging,
if the first indication message comprises a first field, the first paging manner is the WUR link-based paging, and the paging on the WUR link is based on the UE ID and the UE group ID; or
if the first indication message comprises no first field, the first paging manner is the NR main link only-based paging.

6. The method according to any one of claims 1 to 5, wherein before sending the first indication message, the method comprises:
if a first quantity of UEs is less than or equal to a UE capacity upper limit, determining that the first paging manner is: (1) the wake up WUR link-based and user equipment identifier UE ID-based paging, wherein
the first quantity of UEs is determined based on a current quantity of UEs in a tracking area TA and a current quantity of UEs in a radio access network notification area RNA, or the first quantity of UEs is determined based on a current quantity of UEs in a tracking area TA.

7. The method according to any one of claims 1 to 6, wherein before sending the first indication message, the method comprises:
if the first quantity of UEs is greater than the UE capacity upper limit, and is greater than a specific value above the UE capacity upper limit, determining that the first paging manner is: (2) the NR main link only-based paging, wherein
the first quantity of UEs is determined based on the current quantity of UEs in the tracking area TA and the current quantity of UEs in the radio access network notification area RNA, or the first quantity of UEs is determined based on the current quantity of UEs in the tracking area TA.

8. The method according to any one of claims 1 to 7, wherein before sending the first indication message, the method comprises:
if the first quantity of UEs is greater than the UE capacity upper limit, and is less than or equal to the specific value above the UE capacity upper limit, determining that the first paging manner is: (3) the WUR link-based and UE group ID-based paging, wherein
the first quantity of UEs is determined based on the current quantity of UEs in the tracking area TA and the current quantity of UEs in the radio access network notification area RNA, or the first quantity of UEs is determined based on the current quantity of UEs in the tracking area TA.

9. The method according to any one of claims 1 to 8, wherein before sending the first indication message, the method comprises:
receiving a second indication message from a core network device, wherein the second indication message indicates the first paging manner.

10. The method according to any one of claims 1 to 9, wherein before paging the UE in the first paging manner, the method comprises:
receiving a first paging message from the core network device, wherein the first paging message is used to page the UE.

11. The method according to any one of claims 1 to 10, wherein the UE ID is a short UE ID, the short UE ID is a UE ID dedicated to the wake up WUR link, and the first indication message is sent in a broadcast manner.

12. A paging method, applied to a user equipment UE, wherein the method comprises:
receiving a first indication message, wherein the first indication message indicates a first paging manner of a first cell; and
receiving paging in the first paging manner, wherein
the UE camps on the first cell, and the first cell is one of one or more cells of an access network device; and
the first paging manner comprises any one of the following:
(1) wake up WUR link-based and user equipment identifier UE ID-based paging; (2) NR main link only-based paging; and (3) WUR link-based and user equipment UE group identifier ID-based paging;
(1) WUR link-based, UE ID-based, and UE group ID-based paging; and (2) NR main link only-based paging;
(1) wake up WUR link-based paging and user equipment identifier UE ID-based paging; and (2) NR main link only-based paging; or
(1) WUR link-based and UE group ID-based paging; and (2) NR main link only-based paging.

13. The method according to claim 12, wherein the first paging manner is a paging manner determined from at least two paging manners.

14. The method according to claim 12 or 13, wherein
if the first indication message comprises no first field, the first paging manner is the NR main link only-based paging;
if the first indication message comprises a first field, and a value of the first field is a first value, the first paging manner is the WUR link-based paging, and the paging on the WUR link is based on the UE ID; or
if the first indication message comprises a first field, and a value of the first field is a second value, the first paging manner is the WUR link-based paging, and paging on the WUR link is based on the UE group ID.

15. The method according to claim 12 or 13, wherein
if the first indication message comprises only a first field, the first paging manner is the WUR link-based paging, and the paging on the WUR link is based on the UE ID;
if the first indication message comprises only a second field, the first paging manner is the WUR link-based paging, and the paging on the WUR link is based on the UE group ID;
if the first indication message comprises a first field and a second field, the first paging manner is the WUR link-based paging, and the paging on the WUR link is based on the UE ID and the UE group ID; or
if the first indication message neither comprises a first field nor a second field, the first paging manner is the NR main link only-based paging.

16. The method according to claim 12 or 13, wherein when the first paging manner comprises any one of the following: (1) the WUR link-based, UE ID-based, and UE group ID-based paging; and (2) the NR main link only-based paging,
if the first indication message comprises a first field, the first paging manner is the WUR link-based paging, and the paging on the WUR link is based on the UE ID and the UE group ID; or
if the first indication message comprises no first field, the first paging manner is the NR main link only-based paging.

17. A paging method, applied to an access network device, wherein the method comprises:
sending a first indication message, wherein the first indication message indicates that a UE that satisfies a first condition uses a first paging manner;
determining that a first UE is the UE that satisfies the first condition; and
paging the first UE in the first paging manner, wherein
the first UE is capable of using the first paging manner, the first paging manner is WUR link-based paging, the UE that satisfies the first condition comprises the first UE, and the first condition comprises at least one of the following: a UE type is a first type, a UE service type is a first service type, or a discontinuous reception DRX cycle of the UE is less than or equal to a first threshold.

18. The method according to claim 17, wherein
the first indication message indicates that a UE that does not satisfy the first condition uses a second paging manner; and the method comprises:
determining that a second UE is the UE that does not satisfy the first condition; and
paging the second UE in the second paging manner, wherein
the second UE is capable of using the second paging manner, and the first paging manner is different from the second paging manner.

19. The method according to claim 17 or 18, wherein the first condition comprises at least one of the following:
(1) the discontinuous reception DRX cycle of the UE is a specific DRX cycle, and the specific DRX cycle of the UE is less than or equal to the first threshold;
(2) the first type is a reduced capability RedCap, does not support extended eDRX, or is not configured with eDRX; and
(3) the first service type is an allowed slice service type determined with a core network device, and the slice service type comprises ultra-reliable low-latency communication URLLC, massive internet of things MIoT, or high-performance machine-type communication HMTC.

20. The method according to claim 17, wherein
the first paging manner comprises any one of the following: (1) wake up WUR link-based and user equipment identifier UE ID-based paging; (2) WUR link-based and user equipment UE group identifier ID-based paging; and (3) WUR link-based, UE ID-based, and UE group ID-based paging.

21. The method according to any one of claims 18 to 20, wherein the second paging manner comprises NR main link only-based paging.

22. The method according to any one of claims 18 to 21, wherein
before paging the first UE in the first paging manner, the method comprises:
receiving a first paging message from the core network device, wherein the first paging message indicates to page the first UE, and the first paging message comprises a first UE ID; and
receiving a second paging message from the core network device, wherein the second paging message indicates to page the second UE, and the second paging message comprises a second UE ID;
paging the first UE in the first paging manner comprises: paging the first UE in the first paging manner based on the first paging message; and
paging the second UE in the second paging manner comprises: paging the second UE in the second paging manner based on the second paging message.

23. The method according to claim 22, wherein
the first paging message comprises first information, and the first information comprises related information about the first UE or a first result indicating that the first UE satisfies the first condition; and
the second paging message comprises second information, and the second information comprises related information about the second UE or a second result indicating that the second UE does not satisfy the first condition.

24. The method according to claim 23, wherein
paging the first UE in the first paging manner based on the first paging message comprises: paging the first UE in the first paging manner based on the first information; and
paging the second UE in the second paging manner based on the second paging message comprises: paging the second UE in the second paging manner based on the second information.

25. A paging method, applied to a user equipment UE, wherein the UE is a first UE, and the method comprises:
receiving a first indication message, wherein the first indication message indicates that a UE that satisfies a first condition uses a first paging manner;
determining, based on the first indication message, that the first UE is the UE that satisfies the first condition; and
receiving paging in the first paging manner, wherein
the first UE is capable of using the first paging manner, the first paging manner is WUR link-based paging, the first UE satisfies the first condition, the UE that satisfies the first condition comprises the first UE, and the first condition comprises at least one of the following: a UE type is a first type, a UE service type is a first service type, and a discontinuous reception DRX cycle of the UE is less than or equal to a first threshold.

26. The method according to claim 25, wherein the first condition comprises at least one of the following:
(1) the discontinuous reception DRX cycle of the UE is a specific DRX cycle, and the specific DRX cycle of the UE is less than or equal to the first threshold;
(2) the first type is a reduced capability RedCap, does not support extended eDRX, or is not configured with eDRX; and
(3) the first service type is an allowed slice service type determined with a core network device, and the slice service type comprises ultra-reliable low-latency communication URLLC, massive internet of things MIoT, or high-performance machine-type communication HMTC.

27. The method according to claim 25 or 26, wherein
the first paging manner comprises any one of the following: (1) wake up WUR link-based and user equipment identifier UE ID-based paging; (2) WUR link-based and user equipment UE group identifier ID-based paging; and (3) WUR link-based, UE ID-based, and UE group ID-based paging.

28. A paging method, applied to an access network device, wherein the method comprises:
sending a first message and a first indication message, wherein the first message is for configuring a first user equipment UE to use a first paging manner, and the first indication message indicates the first paging manner of a first cell; and
paging the first UE in the first paging manner, wherein
the first UE is capable of using the first paging manner, the first paging manner is WUR link-based paging, and the first UE camps on the first cell.

29. The method according to claim 28, wherein the method comprises:
sending a second message, wherein the second message is for configuring a second user equipment UE to use a second paging manner; and
paging the second UE in the second paging manner, wherein
the second UE is capable of using the second paging manner, and the second UE camps on the first cell.

30. The method according to claim 28 or 29, wherein the method comprises:
the first paging manner comprises any one of the following: (1) wake up WUR link-based and user equipment identifier UE ID-based paging; (2) WUR link-based and user equipment UE group identifier ID-based paging; and (3) WUR link-based, UE ID-based, and UE group ID-based paging; and
the second paging manner comprises NR main link only-based paging.

31. The method according to any one of claims 28 to 30, wherein the method comprises:
receiving a first paging message from a core network device, wherein the first paging message is used to page the first UE, and the first paging message indicates that the first UE uses the first paging manner.

32. The method according to any one of claims 28 to 31, wherein before paging the first UE in the first paging manner, the method comprises:
determining, based on the first paging message, to page the first UE in the first paging manner.

33. The method according to any one of claims 28 to 30, wherein before sending the first message, the method comprises:
determining that the first UE is a UE that satisfies a first condition, wherein the first condition comprises at least one of the following: a UE type is a first type, a UE service type is a first service type, and a discontinuous reception DRX cycle of the UE is less than or equal to a first threshold.

34. The method according to claim 33, wherein the first condition comprises at least one of the following:
(1) the discontinuous reception DRX cycle of the UE is a specific DRX cycle, and the specific DRX cycle of the UE is less than or equal to the first threshold;
(2) the first type is a reduced capability RedCap, does not support extended eDRX, or is not configured with eDRX; and
(3) the first service type is an allowed slice service type determined with a core network device, and the slice service type comprises ultra-reliable low-latency communication URLLC, massive internet of things MIoT, or high-performance machine-type communication HMTC.

35. A paging method, applied to a user equipment UE, wherein the user equipment is a first UE, and the method comprises:
receiving a first message and a first indication message, wherein the first message is for configuring the first UE to use a first paging manner, and the first indication message indicates the first paging manner of a first cell;
determining, based on the first message and the first indication message, to receive paging in the first paging manner; and
receiving paging in the first paging manner, wherein
the first UE is capable of using the first paging manner, the first UE camps on the first cell, and the first paging manner is paging based on a WUR link.

36. The method according to claim 35, wherein
the first paging manner comprises any one of the following: (1) wake up WUR link-based and user equipment identifier UE ID-based paging; (2) WUR link-based and user equipment UE group identifier ID-based paging; and (3) WUR link-based, UE ID-based, and UE group ID-based paging.

37. The method according to claim 35 or 36, wherein before receiving the first message and the first indication message, the method comprises:
indicating, to a access network device, that the first UE is capable of using the first paging manner.

38. An access network device, wherein the access network device comprises a processor and a memory, the memory stores a computer program, and when the computer program is run by the processor, the access network device is enabled to perform the method according to any one of claims 1 to 11, 17 to 24, and 28 to 34.

39. A user equipment, wherein the user equipment comprises a processor and a memory, the memory stores a computer program, and when the computer program is run by the processor, the user equipment is enabled to perform the method according to any one of claims 12 to 16, 25 to 27, and 35 to 37.

40. A computer-readable storage medium, storing a computer program, wherein when the computer program is run on an access network device, the access network device is enabled to perform the method according to any one of claims 1 to 11, 17 to 24, and 28 to 34.

41. A computer-readable storage medium, storing a computer program, wherein when the computer program is run on a user equipment, the user equipment is enabled to perform the method according to any one of claims 12 to 16, 25 to 27, and 35 to 37.

42. A chip, comprising a processor and a memory coupled to the processor, wherein the memory stores a computer program, the chip is located in an access network device, and when the processor executes the computer program, the access network device is enabled to perform the method according to any one of claims 1 to 11, 17 to 24, and 28 to 34.

43. A chip, comprising a processor and a memory coupled to the processor, wherein the memory stores a computer program, the chip is located in a user equipment, and when the processor executes the computer program, the user equipment is enabled to perform the method according to any one of claims 12 to 16, 25 to 27, and 35 to 37.

44. A computer program product, stored in a computer-readable storage medium, wherein when the computer program product runs on an access network device, the access network device is enabled to perform the method according to any one of claims 1 to 11, 17 to 24, and 28 to 34.

45. A computer program product, stored in a computer-readable storage medium, wherein when the computer program product runs on a user equipment, the user equipment is enabled to perform the method according to any one of claims 12 to 16, 25 to 27, and 35 to 37.
